# EUROPEAN PATENT APPLICATION

(11) **EP 2 249 510 A1**
(43) Date of publication of application: **10.11.2010**
(21) Application number: 09715657.4
(22) Date of filing: 09.02.2009
(51) Int. Cl.: H04L 9/08, H04L 9/14

(54) **KEY MANAGEMENT SERVER, TERMINAL, KEY SHARING SYSTEM, KEY DISTRIBUTION PROGRAM, KEY RECEPTION PROGRAM, KEY DISTRIBUTION METHOD, AND KEY RECEPTION METHOD**

(30) Priority: 29.02.2008 JP 2008049514
(71) Applicant: Mitsubishi Electric Corporation, Tokyo 100-8310 (JP)
(72) Inventor: TSUJI, Hirosato, Tokyo 100-8310 (JP); YONEDA, Takeshi, Tokyo 100-8310 (JP); SAITO, Kazumi, Tokyo 100-8310 (JP)
(74) Representative: Pfenning, Meinig & Partner GbR
(86) International application number: PCT/JP2009/052129
(87) International publication number: WO 2009/107474

(57) **Abstract**

In distribution and sharing of a cipher key to be used when performing encrypted communication among a plurality of terminals, to share a cipher key without the need for each terminal to constantly hold and manage a large number of keys. Also, to shorten the time needed to start terminal-to-terminal encrypted communication. Also, to improve the portability of the terminal. A key management server 1 sends by broadcast communication a cipher key, which is specific to each set of terminals that perform encrypted communication, one-sidedly to the respective terminals. The key management server 1 sends, by broadcast communication, cipher key data obtained by encrypting the cipher key by using a device public key which is the public key of an addressed terminal. Each terminal acquires cipher key data addressed to itself and decrypts the acquired cipher key data, thus obtaining a cipher key.

## Description

### Technical Field

The present invention relates to a distribution method and sharing method of a cipher key employed when, e.g., performing encrypted communication among a plurality of terminals.

### Background Art

To encrypt voice, an image, or the content of arbitrary data communicated among a plurality of terminals, the terminals must share a cipher key. A conventional key sharing method includes a method of sharing a key by setting the respective terminals in advance or through communication among the terminals (a method of sharing the key among only the terminals), and a method of sharing a key by setting, in addition to the respective terminals, a third party that serves as a key-issuing server (a method of sharing the key by setting the third party).
The method of sharing the key among only the terminals includes the following methods (1) to (3) : (1) the Pre-shared Secret method which uses, as a key, secret information which is shared in advance; (2) the Public-key Encryption method in which a key is generated by one terminal randomly and is encrypted using the public key of another terminal, and the encrypted key is delivered; and (3) the Diffie-Hellman Key Exchange method (non-patent document 1) of sharing a key by employing the Diffie-Hellman key exchange algorithm.
As the method of sharing the key by setting the third party, a method is proposed in which an access point as a communication device provided with a cipher key generating means and capable of performing two-way communication with each terminal serves as a key-issuing server, and generates and distributes a necessary key in response to a key generation request from a terminal, so that the cipher key is shared among the terminals (patent document 1).
Patent Document 1: JP2005-303449 A
Non-Patent Document 1: "MIKEY: Multimedia Internet KEYing (RFC 3830)", The Internet Society, August 2004 by J. Arkko, E. Carrara, F. Lindholm, M. Naslund, and K. Normman

### Disclosure of the Invention

### Problems to be Solved by the Invention

The conventional key distribution and key sharing methods have the following problems.
First, the methods of sharing the key only among the terminals have the following problems.
According to (1) the Pre-shared Secret method, each terminal must share keys in advance with all the communication parties. If the system includes, e.g., 1,000 terminals, each terminal must have 999 keys. When the keys are to be updated, the 999 keys must be updated in each terminal. Therefore, each terminal must individually manage the keys that increase in number in accordance with the size of the system.
In the key distribution and sharing method such as (2) the Public-key Encryption method or (3) the Diffie-HellmanKeyExchange method as described above which uses the public key encryption algorithm, each terminal must have a key generating function and perform arithmetic operation process of public key encryption algorithm. In addition, to prove the authenticity of the public key of each terminal, each terminal is required to receive a public key certificate issued by the Certification Authenticity (CA) and verify the public key certificate. For this purpose, each terminal must be capable of performing public key arithmetic operation and verification of the certificate, which is a complicated arithmetic process. Also, when the terminals are to start encrypted communication with each other, they require a processing time for public key arithmetic operation and certificate verification. Therefore, it takes time for the terminals to start communication.
The method of sharing the key by setting the third party has the following problems.
In the key distribution and key sharing method through two-way communication with the key-issuing server, each terminal need to constantly perform two-way communication with the key-issuing server. Accordingly, each terminal can only be used within a distance range where it can perform two-way communication with the key-issuing server. To enlarge the range in which the terminal can be used, both the terminals and the key-issuing server must be provided with a long-distance two-way communication function. For example, when satellite communication is employed between the terminals and the key-issuing server, each terminal requires an antennae and a strong battery that enable two-way communication with the communication satellite. This increases the volume and weight of each terminal, thus impairing the portability.
The present invention has been made to solve, for example, the problems described above, and has as its object to share a cipher key for terminal-to-terminal communication without the need for each terminal to constantly hold and manage a large number of keys. It is another object of the present invention to shorten the time neededbefore the terminals start encrypted communication. It is still another object of the present invention to improve the portability of the terminal while enlarging the range where the terminal can be used, without increasing the volume or weight of the terminal.

### Means to Solve the Problems

According to the present invention, for example, a key management server capable of communicating with a plurality of terminals comprises:
a cipher key data generation unit which generates, with a processing device, a master key used for terminal-to-terminal encrypted communication among the plurality of terminals;
an encryption unit which encrypts, with the processing device, the master key into an encrypted master key by using a device public key which is a public key of a terminal that uses the master key generated by the cipher key data generation unit; and
a data transmission unit which transmits, with a communication device, the encrypted master key encrypted by the encryption unit to the plurality of terminals one-sidedly as cipher key data for the terminal as a destination.

For example, the cipher key data generation unit generates a specific master key for each set of terminals that perform encrypted communication.

For example, the key management server further comprises
a key update data generation unit which generates, with a processing device, key update data which is data to update the master key generated by the cipher key data generation unit and which is data common to the plurality of terminals, and
the data transmission unit transmits the key update data generated by the key update data generation unit to the plurality of terminals.

For example, the key management server further comprises
a revocation information generation unit which generates, with a processing device, key revocation information which instructs disposal of a master key used for encrypted communication with a disabled terminal, whose predetermined function is to be disabled, and
the data transmission unit transmits the key revocation information generated by the revocation information generation unit to the plurality of terminals.

For example, the key management server further comprises
a disable command generation unit which generates, with a processing device, disable command information which instructs a disabled terminal, whose predetermined function is to be disabled, to halt the predetermined function, and
the data transmission unit transmits the disable command information generated by the disable command generation unit to the plurality of terminals as disabling data for the disabled terminal as a destination.

For example, the key management server further comprises
a digital signature generation unit which generates, with a processing device, digital signature concerning the encrypted master key by using a private key of the key management server, and
the data transmission unit transmits the encrypted master key and the digital signature which is generated by the digital signature generation unit as cipher key data.

For example, a terminal comprises:
a data reception unit which receives, with a communication device, cipher key data generated by a key management server as an encrypted master key by encrypting a master key by using a device public key, which is a public key of a predetermined terminal, and sent by broadcast communication for the terminal as a destination;
a cipher key data interpretation unit which checks, with a processing device, whether or not the cipher key data received by the data reception unit is sent by broadcast communication for a terminal thereof as a destination;
a device private key management unit which stores a device private key, which is a private key of the terminal thereof, in a storage device;
a decryption unit which, when the cipher key data interpretation unit determines that the cipher key data received by the data reception unit is sent by broadcast communication for the terminal thereof as the destination, decrypts, with a processing device, the encrypted master key included in the cipher key data into the master key by using the device private key stored in the device private key management unit;
a cipher key storage unit which stores the master key decrypted by the decryption unit in a storage device; and
a terminal-to-terminal communication unit which performs encrypted communication with a communication device by using the master key stored in the cipher key storage unit.

For example, the data reception unit receives key update data which is data to update the master key sent by broadcast communication by the key management server, and
the terminal further comprises
a key update arithmetic operation unit which calculates a new master key with a processing device based on the master key stored in the cipher key storage unit and the key update data received by the data reception unit, and
the terminal-to-terminal communication unit performs encrypted communication by using the new master key calculated by the key update arithmetic operation unit.

For example, the terminal further comprises
a reception data storage unit which stores the cipher key data in a storage device when the cipher key data interpretation unit determines that the cipher key data received by the data reception unit is not sent by broadcast communication for the terminal thereof as the destination,
the terminal-to-terminal communication unit checks with a processing device whether or not the other party terminal to perform encrypted communication with has a master key used for encrypted communication,
the reception data storage unit retrieves the cipher key data sent by broadcast communication for the other party terminal as a destination among cipher key data stored in the storage device when the terminal-to-terminal communication unit determines that the other party terminal does not have the master key used for encrypted communication, and
the terminal-to-terminal communication unit transmits the cipher key data retrieved by the reception data storage unit to the other party terminal.

For example, the terminal further comprises
a spare key data generation unit which generates, with a processing device, spare key data which is a spare key to be used for encrypted communication, and
the terminal-to-terminal communication unit transmits the spare key data generated by the spare key data generation unit to predetermined another terminal by encrypted communication by using the master key, in a predetermined case, in order to share the spare key data with predetermined another terminal in advance and, when encrypted communication cannot be performed by using the master key, performs encrypted communication by using the spare key data.

For example, the terminal further comprises:
a secret information input unit which inputs, with an input device, secret information shared by a user of another terminal to perform encrypted communication with in advance; and
a secret information arithmetic operation unit which generates, with a processing device, a new master key through arithmetic operation in accordance with a predetermined method shared with another terminal in advance based on the master key and the secret information input by the secret information input unit, and
the terminal-to-terminal communication unit performs encrypted communication by using the new master key generated by the secret information arithmetic operation unit.

For example, the data reception unit receives key revocation information sent from the key management server by broadcast communication and instructing disposal of a master key used for encrypted communication with a disabled terminal, whose predetermined function is to be disabled, and
the terminal further comprises
a revocation information interpretation unit which deletes, with a processing device, the master key to be used for encrypted communication with the disabled terminal from master keys stored in the cipher key storage unit based on the key revocation information received by the data reception unit.

For example, the data reception unit receives disabling data generated by the key management server as disable command information that instructs a disabled terminal, whose predetermined function is to be disabled, to halt the predetermined function, and sent from the key management server by broadcast communication for the disabled terminal as the destination, and the terminal further comprises
a disable command interpretation unit which checks whether or not the disabling data received by the data reception unit is sent by broadcast communication for a terminal thereof as a destination and, when it is determined that the disabling data is sent by broadcast communication for the terminal thereof as the destination, halts the predetermined function with a processing device.

For example, the terminal further comprises
a reception data storage unit which stores the disabling data in a storage device when the disable command interpretation unit determines that the disabling data is not sent by broadcast communication for the terminal thereof as the destination, and
the terminal-to-terminal communication unit checks whether or not the other party terminal to perform encrypted communication with is a terminal to which the disabling data stored in the reception data storage unit is addressed and, when it is determined that the other party terminal is the terminal to which the disabling data is addressed, transmits the disabling data to the other party terminal.

For example, the data reception unit receives, together with the encryptedmaster key, a digital signature, generated concerning the encrypted master key by the key management server by using a private key, as cipher key data, and
the terminal further comprises
a digital signature verification unit which verifies the digital signature of the cipher key data by using a public key of the key management server.

For example, in a key sharing system comprising a plurality of terminals which perform encrypted communication and a key management server capable of communicating with the plurality of terminals,
the key management server includes
a cipher key data generation unit which generates, with a processing device, a master key used for terminal-to-terminal encrypted communication among the plurality of terminals,
an encryption unit which encrypts, with the processing device, the master key into an encrypted master key by using a device public key which is a public key of a terminal that uses the master key generated by the cipher key data generation unit, and
a data transmission unit which transmits, with a communication device, the encrypted master key encrypted by the encryption unit to the plurality of terminals one-sidedly as cipher key data for the terminal as a destination, and
each one of the plurality of terminals includes
a data reception unit which receives, with a communication device, the cipher key data transmitted by the data transmission unit,
a cipher key data interpretation unit which checks, with a processing device, whether or not the cipher key data received by the data reception unit is transmitted for a terminal thereof as a destination,
a device private key management unit which stores a device private key, which is a private key of the terminal thereof, in a storage device,
a decryption unit which, when the cipher key data interpretation unit determines that the cipher key data received by the data reception unit is transmitted for the terminal thereof as the destination, decrypts, with a processing device, the encrypted master key included in the cipher key data into the master key by using the device private key stored in the device private key management unit,
a cipher key storage unit which stores the master key decrypted by the decryption unit in a storage device, and
a terminal-to-terminal communication unit which performs encrypted communication with a communication device by using the master key stored in the cipher key storage unit.

For example, a key delivery program for a key management server capable of communicating with a plurality of terminals causes a computer to perform:
a cipher key data generation process for generating, with a processing device, a master key to be used for terminal-to-terminal encrypted communication among the plurality of terminals;
an encryption process for encrypting the master key into an encrypted master key with the processing device by using a device public key which is a public key of a terminal that uses the master key generated in the cipher key data generation process; and
a data transmission process for transmitting, with a communication device, the encrypted master key encrypted in the encryption process to the plurality of terminals one-sidedly as cipher key data for the terminal as a destination.

For example, a key reception program for a terminal causes a computer to perform:
a data reception process for receiving, with a communication device, cipher key data generated by a key management program as an encrypted master key by encrypting a master key by using a device public key, which is a public key of a predetermined terminal, and sent by broadcast communication for the terminal as a destination;
a cipher key data interpretation process for checking, with a processing device, whether or not the cipher key data received in the data reception process is transmitted for a terminal thereof as a destination;
a decryption process for decrypting, with a processing device, when it is determined in the cipher key data interpretation process that the cipher key data received in the data reception process is transmitted for the terminal thereof as the destination, the encrypted master key included in the cipher key data into the master key by using a device private key which is a private key of the terminal thereof and stored in a storage device in advance;
a cipher key storage process for storing the master key decrypted in the decryption process in the storage device; and
a terminal-to-terminal communication process for performing, with the communication device, encrypted communication by using the master key stored in the cipher key storage process.

For example, a key delivery method for a key management server capable of communicating with a plurality of terminals comprises:
a cipher key data generating step of generating, with a processing device, a master key to be used for terminal-to-terminal encrypted communication among the plurality of terminals;
an encryption step of encrypting, with the processing device, the master key into an encrypted master key by using a device public key which is a public key of a terminal that uses the master key generated in the cipher key data generation step; and
a data transmission step of transmitting, with a communication device, the encrypted master key encrypted in the encryption step to the plurality of terminals one-sidedly as cipher key data for the terminal as a destination.

For example, a key reception method for a terminal comprises:
a data reception step of receiving, with a communication device, cipher key data generated by a key management server as an encrypted master key by encrypting a master key by using a device public key, which is a public key of a predetermined terminal, and sent by broadcast communication for the terminal as a destination;
a cipher key data interpretation step of checking, with a processing device, whether or not the cipher key data received in the data reception process is transmitted for a terminal thereof as a destination;
a decryption step of decrypting, with a processing device, when it is determined in the cipher key data interpretation process that the cipher key data received in the data reception process is transmitted for the terminal thereof as the destination, the encrypted master key included in the cipher key data into the master key by using a device private key which is a private key of the terminal thereof and stored in a storage device in advance;
a cipher key storing step of storing the master key decrypted in the decryption process in the storage device; and
a terminal-to-terminal communication step of performing, with the communication device, encrypted communication by using the master key stored in the cipher key storing step.

### Effect of the Invention

The key management server according to the present invention transmits cipher key data one-sidedly to the respective terminals. Therefore, the cipher key (master key) can be shared even if two-way communication cannot be performed. Hence, a cipher key for terminal-to-terminal communication can be distributed and shared while each terminal need not be equipped with a key generating function, which is a complicated arithmetic operation process. Also, as the key can be distributed and shared among the terminals each of which need not have the complicated arithmetic operation process, the time needed until starting encrypted communication among the terminals can be shortened. Furthermore, since each terminal need not be loaded with the function of communicating with the key-issuing server, its volume and weight are not increased, so that the portability of the terminal can be improved.

### Best Mode of Carrying out the Invention

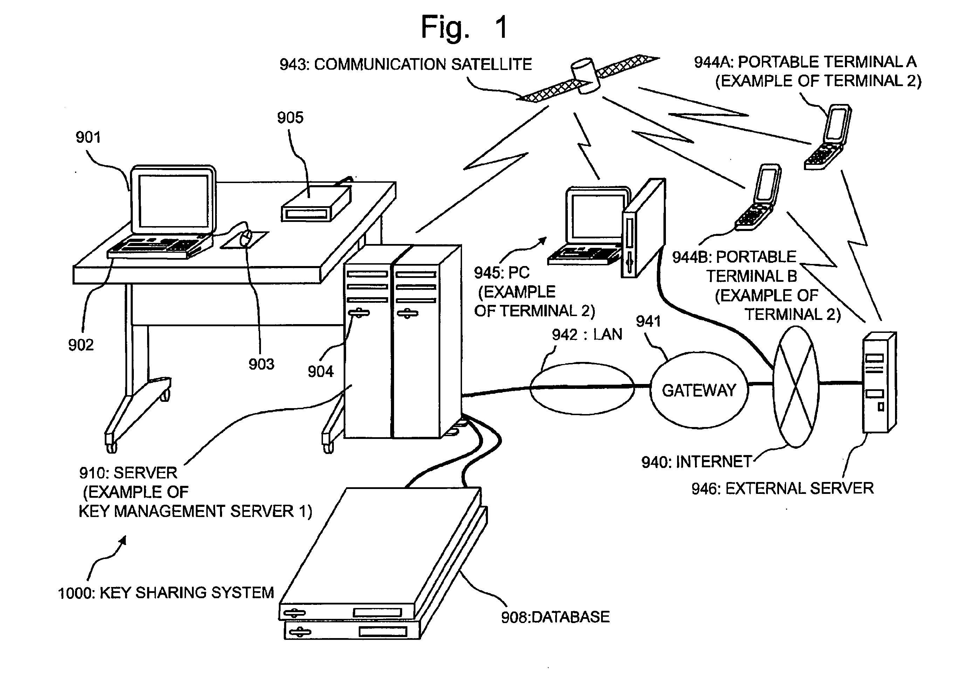

Fig. 1 is a view showing an example of the appearance of a key sharing system 1000 according to an embodiment.
Referring to Fig. 1, the key sharing system 1000 includes a server 910. The server 910 includes hardware resources such as an LCD 901 (Liquid Crystal Display), a keyboard 902 (Key· Board: K/B), a mouse 903, an FDD 904 (Flexible·Disc·Drive), and a CDD 905 (Compact Disc Drive). The hardware resources are connected to each other through cables and signal lines. The server 910 is a computer connected to a database 908. The server 910 is also connected to the Internet 940 via a local area network 942 (LAN) and a gateway 941. The server 910 is also connected to a communication satellite 943 or the like through a wireless network.
The LAN, Internet, and wireless network are connected to an external server 946, a portable terminal 944A, a portable terminal 944B, a PC 945 (Personal Computer), and the like.
Note that the server 910 is an example of a key management server 1, and that the portable terminal 944A, portable terminal 944B, and PC 945 are examples of a terminal 2.

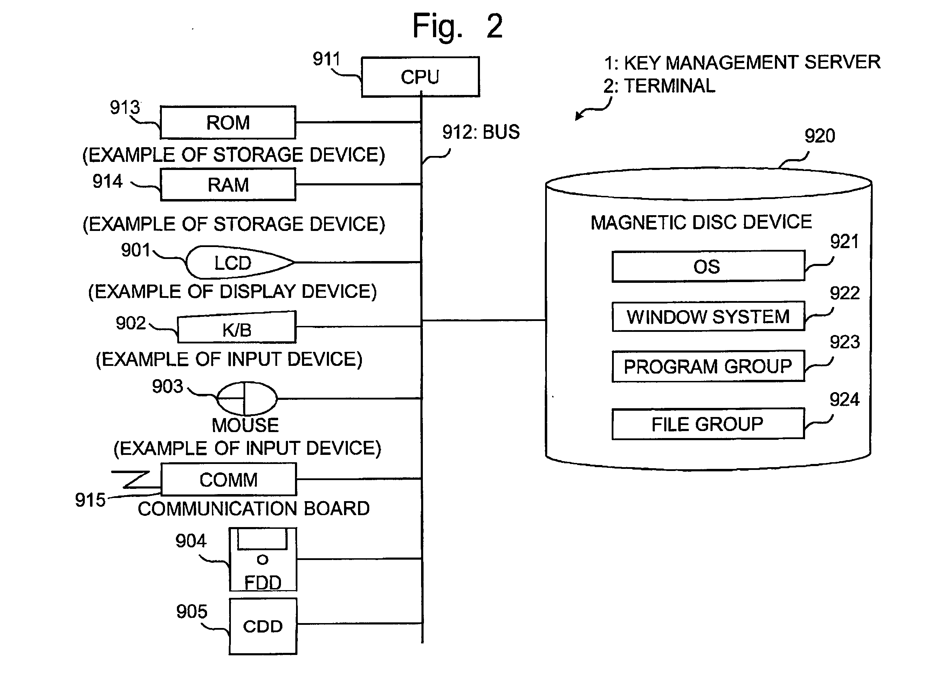

Fig. 2 shows examples of the hardware resources of the key management server 1 and terminal 2 of this embodiment.
Referring to Fig. 2, each of the key management server 1 and the terminal 2 includes a CPU 911 (Central·Processing·Unit; also called a central processing device, a processing device, an arithmetic operational device, a microprocessor, a microcomputer, or a processor) which executes a program. The CPU 911 is connected to a ROM 913, a RAM 914, a communication board 915, the LCD 901, the keyboard 902, the mouse 903, the FDD 904, the CDD 905, and a magnetic disc device 920 through a bus 912, and controls these hardware resources. In place of the magnetic disc device 920, a storage device such as an optical disc device or a memory card reader/writer may be employed.

The RAM 914 is an example of a volatile memory. The storage media such as the ROM 913, the FDD 904, and the magnetic disc device 920 are examples of a nonvolatile memory. These memories are examples of a storage device 984.
The communication board 915, the keyboard 902, the FDD 904, and the like are examples of an input device 982.
The LCD 901 is an example of a display device 986.

The communication board 915 is connected to the local area network 942 or the like. The communication board 915 need not always be connected to the local area network 942 but may be connected to a WAN (Wide Area Network) such as the Internet 940 or the ISDN. The communication board 915 is an example of a communication device 988.
Each of the magnetic disc device 920, the ROM 913, and the like stores an operating system 921 (OS), a window system 922, a program group 923, and a file group 924. The programs in the program group 923 are executed by the CPU 911, operating system 921, and window system 922.

The program group 923 stores programs that implement functions explained as a "key management server processing unit 1-1" and a "terminal processing unit 2-1" in the following embodiments. The programs are read and executed by the CPU 911.
The file group 924 stores information, data, signal values, variables, and parameters which will be explained as "...key", "...data", and "...determination" in the following embodiments, for the items of the "files" and "database". The "files" and "database" are stored in a recording medium such as a disc or a memory. The information, data, signal values, variables, and parameters stored in the memory medium such as the disc or memory are loaded in the main memory or cache memory by the CPU 911 through a read/write circuit and are used for operation of the CPU 911 such as extraction, retrieval, reference, comparison, arithmetic operation, calculation, processing, outputting, printing, displaying, and the like. While the CPU 911 performs extraction, retrieval, reference, comparison, arithmetic operation, calculation, processing, outputting, printing, or displaying, the information, data, signal values, variables, and parameters are temporarily stored in the main memory, cache memory, or buffer memory.
In the description of the following embodiments, arrows in flowcharts mainly represent input/output of the data or signals. The data and signal values are recorded on the recording medium such as the memory of the RAM 914, the flexible disc of the FDD 904, a compact disc, the magnetic disc of the magnetic disc device 920, or other optical discs, mini discs, or DVDs (Digital·Versatile ·Disc). The data and signals are transmitted on-line through the bus 912, the signal line, the cable, or other transmission media.

In the following embodiments, a "...unit" may be a "...circuit", "...device", "...equipment", or "...means", or "...step", "...procedure", or "...process". In other words, a "...unit" may be realized by firmware stored in the ROM 913. A "...process" may be a "...step". Alternatively, a "...process" may be practiced by only software, only hardware such as an element, device, board, or wiring, by a combination of software and hardware, or by a combination of software and firmware. The firmware and software are stored in a recording medium such as a magnetic disc, a flexible disc, an optical disc, a compact disc, a mini disc, or a DVD as programs. The program is read by the CPU 911 and executed by the CPU 911. In other words, the program causes the computer to function as the following "...unit", or causes the computer to execute the procedure or method of the following "...unit".

### Embodiment 1.

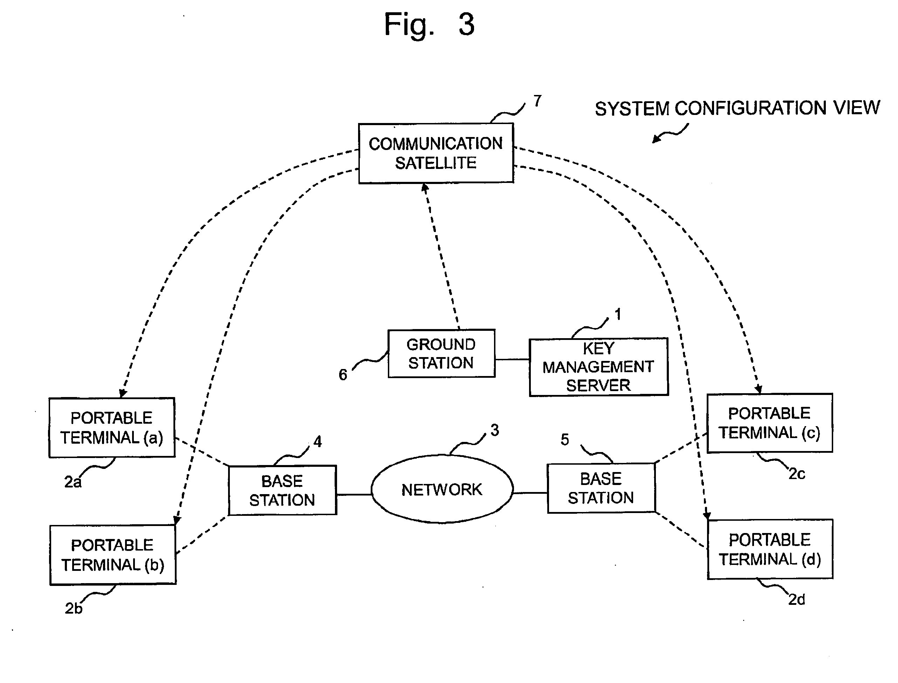

Fig. 3 shows the system configuration of the first embodiment.
Referring to Fig. 3, a key management server 1 is a server that generates and distributes a cipher key used for terminal-to-terminal communication. A portable terminal (a) 2a, a portable terminal (b) 2b, a portable terminal (c) 2c, andaportable terminal (d) 2d are examples of a portable type terminal (an example of a terminal 2) that performs terminal-to-terminal encrypted communication. A network 3 is a backbone network used as a communication path for terminal-to-terminal communication. A base station 4 and a base station 5 are systems that communicate directly with the portable terminal (a) 2a, portable terminal (b) 2b, portable terminal (c) 2c, and portable terminal (d) 2d and relay them to communicate with other portable terminals and the network 3. A ground station 6 is a relay system to transmit various types of data transmitted from the key management server 1 to the respective portable terminals via a communication satellite 7. The communication satellite 7 is a satellite system which transmits various types of data relayed from the ground station 6 to the portable terminal (a) 2a, portable terminal (b) 2b, portable terminal (c) 2c, and portable terminal (d) 2d.

The outline of the operation of key distribution and key sharing by distributing the cipher key data will be described.

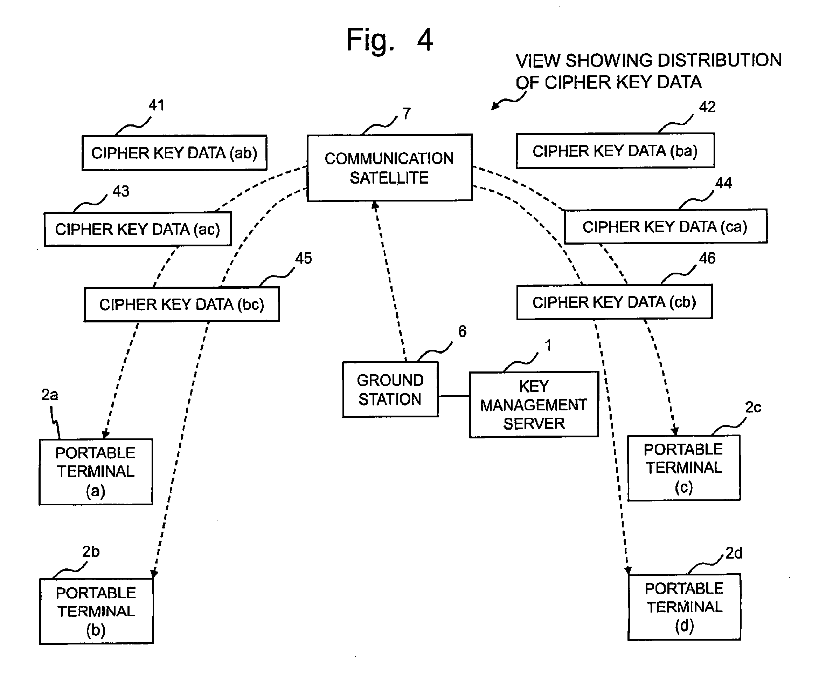

Fig. 4 is a view showing the data flow when distributing the cipher key data in the system configuration shown in Fig. 3.
The key management server 1 generates a cipher key (master key) specific to each set of portable terminals that perform encrypted communication. The key management server 1 then encrypts the cipher key by using the public key (device public key) of the destination portable terminal, adds predetermined information to the resultant cipher key to form cipher key data, and sends the cipher key data by broadcast communication. Each portable terminal acquires cipher key data for itself as the destination and decrypts the cipher key data, thus obtaining a cipher key.
More specifically, in Fig. 4, cipher key data (ab) 41 is data obtained by encrypting, for the portable terminal (a) 2a as the destination, a cipher key used for encrypted communication between the portable terminal (a) 2a and portable terminal (b) 2b. Cipher key data (ba) 42 is data obtained by encrypting, for the portable terminal (b) 2b as the destination, a cipher key used for encrypted communication between the portable terminal (a) 2a and portable terminal (b) 2b. Cipher key data (ac) 43 is data obtained by encrypting, for the portable terminal (a) 2a as the destination, a cipher key used for encrypted communication between the portable terminal (a) 2a and portable terminal (c) 2c. Cipher key data (ca) 44 is data obtained by encrypting, for the portable terminal (c) 2c as the destination, a cipher key used for encrypted communication between the portable terminal (a) 2a and portable terminal (c) 2c. Cipher key data (bc) 45 is data obtained by encrypting, for the portable terminal (b) 2b as the destination, a cipher key used for encrypted communication between the portable terminal (b) 2b and portable terminal (c) 2c. Cipher key data (cb) 46 is data obtained by encrypting, for the portable terminal (c) 2c as the destination, a cipher key used for encrypted communication between the portable terminal (b) 2b and portable terminal (c) 2c.

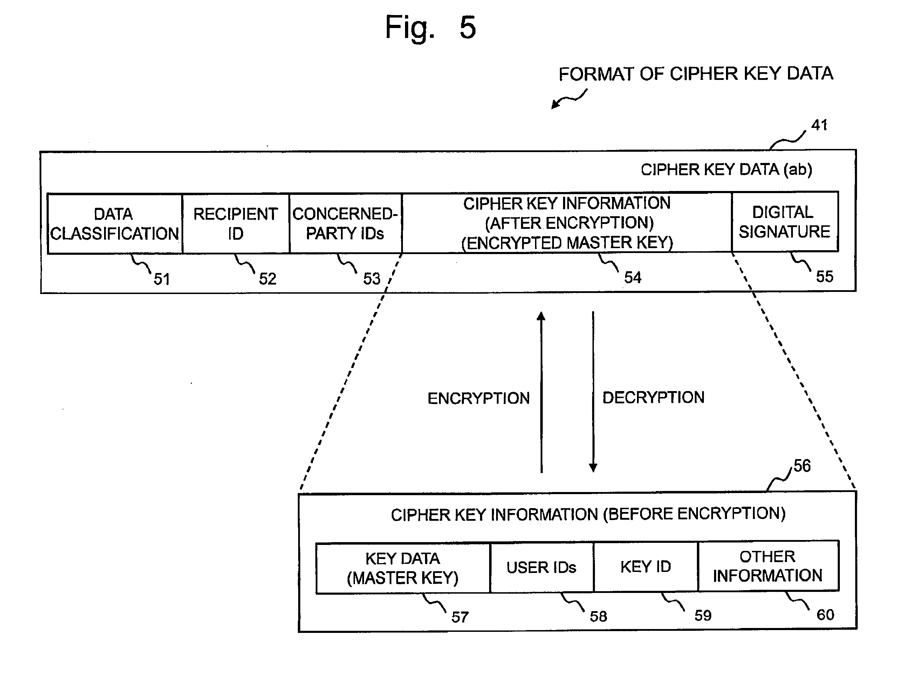

The cipher key data to be sent from the key management server 1 by broadcast communication will be described with reference to Fig. 5. Fig. 5 shows the data format of the cipher key data (ab) 41 in Fig. 4. The data format of each of the cipher key data (ba) 42, cipher key data (ac) 43, cipher key data (ca) 44, cipher key data (bc) 45, and cipher key data (cb) 46 is identical to the data format of the cipher key data (ab) 41. Referring to Fig. 5, data classification 51 is a flag indicating that the data type is cipher key data. Recipient ID 52 is an ID representing a portable terminal as the recipient of the cipher key data. When the data is the cipher key data (ab) 41, an ID representing the portable terminal (a) 2a is set as the recipient ID 52. Concerned-party IDs 53 are IDs (a plurality of IDs can be specified) representing portable terminals, other than the recipient of the cipher key data, which use the same cipher key. When the data is the cipher keydata (ab) 41, an ID representing the portable terminal (b) 2b is set as the concerned-party IDs 53. Cipher key information (after encryption) 54 is a content obtained by encrypting the content of the cipher key information (before encryption) 56 for the recipient. Digital signature 55 is generated by the private key of the key management server 1 and serves as the check value for detecting falsification. The cipher key information (before encryption) 56 is the content of the cipher key used for encrypted communication between the portable terminals. Key data 57 is a cipher key and includes information such as the type and parameters of encryption algorithm which is necessary when the key data 57 is to be used as a key. Note that the entire portion of the key data 57, or only the cipher key will be referred to as a master key. User IDs 58 are the IDs (a plurality of IDs can be specified) of portable terminals that use the key data 57. When the data is the cipher key data (ab) 41, an ID representing the portable terminal (a) 2a and an ID representing the portable terminal (b) 2b are set as the user IDs 58. In other words, information on both the recipient ID 52 and concerned-party IDs 53 are set as the user IDs 58. Key ID 59 is an ID assigned to correspond to the key data 57 for the same user IDs 58 by one to one correspondence. In other words, the key ID 59 of the cipher key data (ab) 41 is the same as the key ID 59 of the cipher key data (ba) 42. Other information 60 is additional information such as the term of validity of the cipher key.

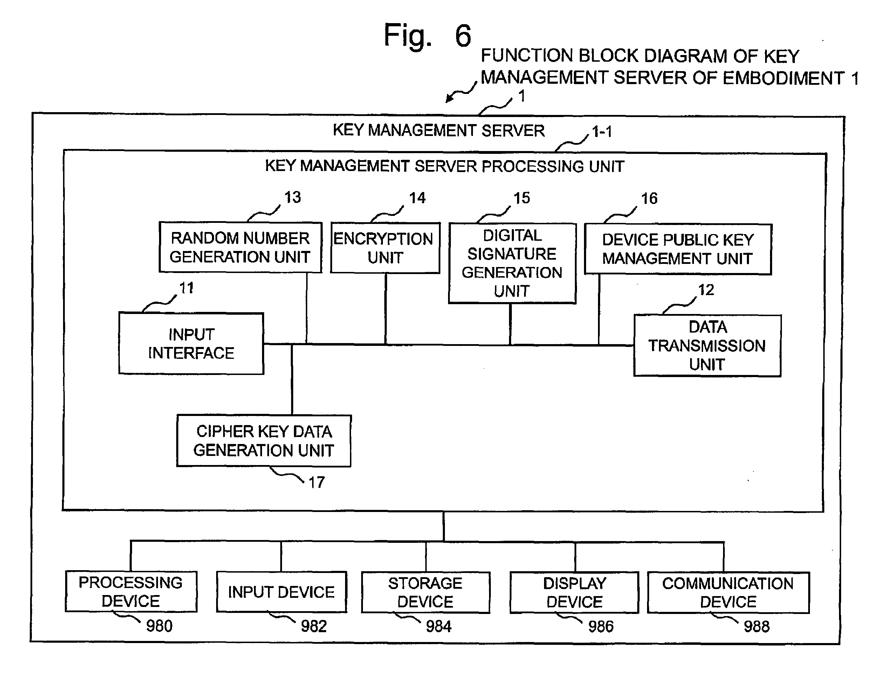

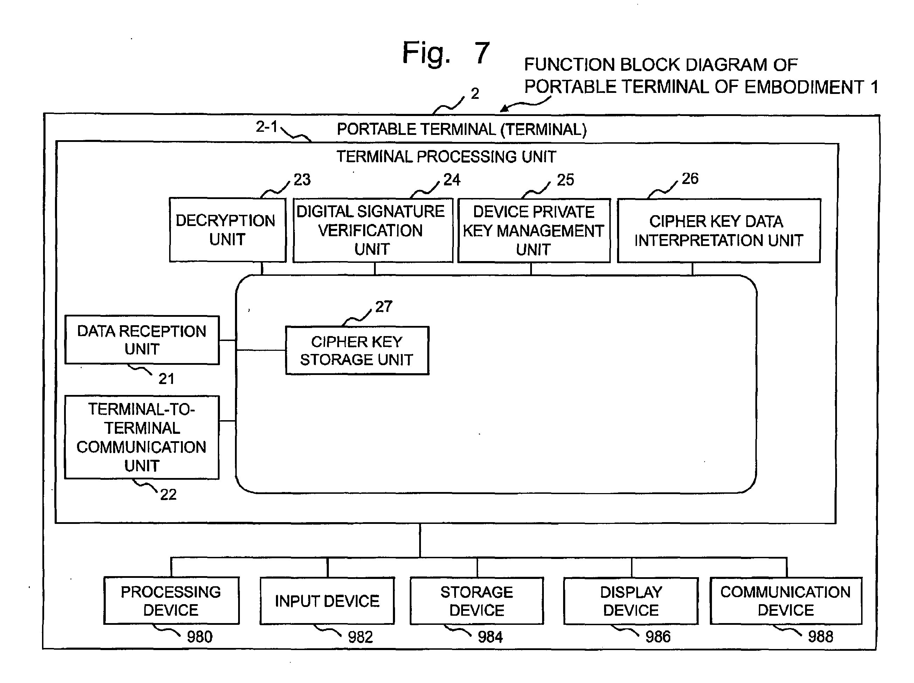

The function of the key management server 1 and the function of a portable terminal (an example of the terminal 2) such as the portable terminal (a) 2a, portable terminal (b) 2b, portable terminal (c) 2c, or portable terminal (d) 2d of the first embodiment will be described with reference to Figs. 6 and 7.
Fig. 6 is a function block diagram showing the function of the key management server 1 of the first embodiment. The key management server 1 can communicate with a plurality of portable terminals, and is provided with a key management server processing unit 1-1, a processing device 980, the input device 982, the storage device 984, the display device 986, and the communication device 988. For example, the key management server processing unit 1-1 is software or a program and is provided with an input interface 11, a data transmission unit 12, a random number generation unit 13, an encryption unit 14, a digital signature generation unit 15, a device public key management unit 16, and a cipher key data generation unit 17.
The input interface 11 receives an input from the operator of the key management server 1 via the input device 982.
The data transmission unit 12 transmits, with the communication device 988, the cipher key data generated by the key management server 1 to the respective portable terminals via a broadcasting system such as the ground station 6 or communication satellite 7.
The random number generation unit 13 generates, with the processing device 980, random bit string data to be used as a cipher key or key update data.
The encryption unit 14 encrypts, with the processing device 980, part of each of the various types of data generated by the key management server 1 such that only a specific portable terminal can decrypt it. More specifically, with the processing device 980, the encryption unit 14 encrypts the cipher key by using a device public key which is the public key of the portable terminal that uses the cipher key generated by the cipher key data generation unit 17 (to be described later). The cipher key encrypted by the device public key is called an encrypted master key.
The digital signature generation unit 15 safely stores the private key of the key management server 1 and generates, by using the private key of the key management server 1, digital signature which is used to detect falsification of the various types of data generated by the key management server 1.
The device public key management unit 16 safely stores the device public keys of the respective portable terminals in the storage device 984 in order to encrypt part of the various types of data which are to be transmitted from the key management server 1 to the portable terminal (a) 2a, portable terminal (b) 2b, portable terminal (c) 2c, and portable terminal (d) 2d.
The cipher key data generation unit 17 generates, with the processing device 980, the cipher key to be used for encrypted communication among the portable terminals on the basis of the random bit string data generated by the random number generation unit 13. The cipher key data generation unit 17 uses the encryption data key generated by the encryption unit 14 as delivery cipher key data addressed to the delivery-destination portable terminal.

Fig. 7 is a function block diagram showing the function of the portable terminal (terminal 2) of the first embodiment. Namely, Fig. 7 shows the internal configuration of the portable terminal (a) 2a. The internal configuration of each of the portable terminal (b) 2b, portable terminal (c) 2c, and portable terminal (d) 2d is identical to the internal configuration of the portable terminal (a) 2a. The portable terminal is provided with the terminal processing unit 2-1, a processing device 980, the input device 982, the storage device 984, the display device 986, and the communication device 988. The terminal processing unit 2-1 is, e.g., software or a program, and provided with a data reception unit 21, a terminal-to-terminal communication unit 22, a decryption unit 23, a digital signature verification unit 24, a device private key management unit 25, a cipher key data interpretation unit 26, and a cipher key storage unit 27.
The data reception unit 21 receives, with the communication device 988, various types of data transmitted from the key management server 1 via the communication satellite 7.
The terminal-to-terminal communication unit 22 encrypts part of the content of the data, when necessary, and communicates the data to other portable terminals with the communication device 988. The terminal-to-terminal communication unit 22 has an encryption function and a decryption function.
The decryption unit 23 decrypts, of the various types of data received by the data reception unit 21 from the key management server 1, the portions which are encrypted for its own terminal, with the processing device 980 and by using the device private key stored in the device private key management unit 25.
The digital signature verification unit 24 verifies the digital signature received by the data reception unit 21 from the key management server 1 and serving to detect the falsification of the various types of data by using the public key of the key management server 1.
The device private key management unit 25 safely stores the device private key, which is the private key of its own portable terminal, in the storage device 984.
The cipher key data interpretation unit 26 interprets the cipher key data received by the data reception unit 21 from the key management server 1. For example, the cipher key data interpretation unit 26 checks, with the processing device 980, whether or not the cipher key data received by the data reception unit 21 is sent by broadcast communication for its own terminal as the destination.
The cipher key storage unit 27 stores the cipher key decrypted by the decryption unit 23 in the cipher key table of the storage device 984. The cipher key table is a table that stores the key used for encrypted communication.

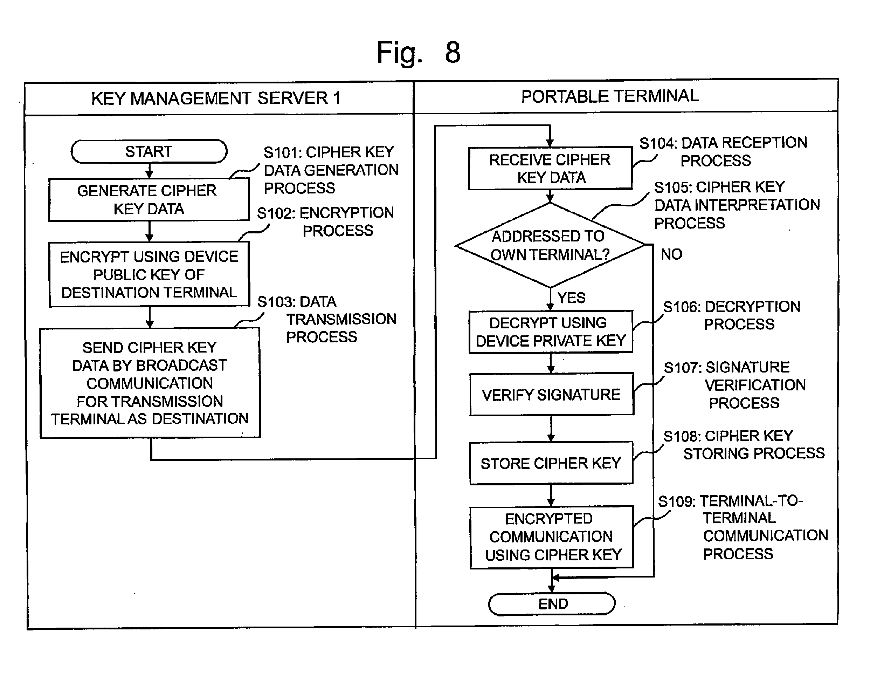

The operation performed by the plurality of portable terminals to share the cipher keys used for encrypted communication will be described with reference to Fig. 8. Fig. 8 is a flowchart showing the operation in which the key management server 1 generates and distributes the cipher keys so that the portable terminals share the cipher keys.

The process by the key management server 1 will be described first.
In a cipher key data generation process (S101), the cipher key data generation unit 17 generates the cipher key data (ab) 41, cipher key data (ba) 42, and the like in order to distribute the cipher keys used for terminal-to-terminal encrypted communication of the system. The cipher key data generation unit 17 generates the key data 57 of the cipher keys by using the random number generation unit 13, and sets the user IDs 58, key ID 59, and other information 60, thus generating the cipher key information (before encryption) 56. The cipher key data generation unit 17 also sets the data classification 51, recipient ID 52, and concerned-party IDs 53, thus generating the cipher key data. The cipher key data generation unit 17 generates a cipher key specific to each set of portable terminals that perform encrypted communication.

In an encryption process (S102), the encryption unit 14 generates the cipher key information (after encryption) 54 (encrypted master key) from the cipher key information (before encryption) 56 by using the device public key of each portable terminal managed by the device public key management unit 16. In other words, the encryption unit 14 encrypts the key data 57 by using the device public key, which is the public key of the portable terminal that uses the cipher key generated by the cipher key data generation unit 17. The encryption unit 14 also causes the digital signature generation unit 15 to generate the digital signature 55 by using the private key of the key management server 1, and adds the digital signature 55 to the cipher key data.

In a data transmission process (S103), the data transmission unit 12 transmits the generated cipher key data (ab) 41, cipher key data (ba) 42, and the like to the communication satellite 7 via the ground station 6. The communication satellite 7 sends all the cipher key data to all the portable terminals by broadcast communication. As the communication from the communication satellite 7 possibly cannot reach the respective portable terminals, each cipher key data is transmitted repeatedly and periodically. In other words, the data transmission unit 12 of the key management server 1 repeatedly transmits the cipher key data one-sidedly to the portable terminals without receiving any request from them.

The process performed on the side of the portable terminal will be described.
Each of the portable terminal (a) 2a, portable terminal (b) 2b, portable terminal (c) 2c, and portable terminal (d) 2d receives the cipher key data transmitted from the communication satellite 7 and stores it in the storage device 984 when the cipher key data is addressed to itself.

In a data reception process (S104), the data reception unit 21 of each portable terminal receives data from the communication satellite 7.

In a cipher key data interpretation process (S105), the cipher key data interpretation unit 26 checks whether or not the data classification 51 is cipher key data. If the data classification 51 is cipher key data, the cipher key data interpretation unit 26 performs a process for the cipher key data. First, the cipher key data interpretation unit 26 checks whether or not the cipher key data is sent by broadcast communication to its own terminal as the destination by referring to the recipient ID 52. If the cipher key data interpretation unit 26 determines that the received cipher key data is addressed to its terminal (YES in S105), it controls to perform the processes from (S106). If the cipher key data interpretation unit 26 determines that the received cipher key data is not addressed to its own terminal (NO in S105), it terminates the process.

In a decryption process (S106), the decryption unit 23 decrypts the cipher key information (after encryption) 54 into the cipher key information (before encryption) 56 by using the device private key which is the private key of its own terminal stored in the storage device 984 and managed by the device private key management unit 25.

In a signature verification process (S107), the digital signature verification unit 24 verifies the digital signature 55 by using the public key of the key management server 1 which is managed as it is stored in the storage device 984, thus confirming that the cipher key data is not falsified.

If falsification is not detected, in a cipher key storing process (S108), the cipher key storage unit 27 stores the decrypted cipher key data in the storage device 984.

In a terminal-to-terminal communication process (S109), the terminal-to-terminal communication unit 22 performs encrypted communication by using the cipher key data stored in the cipher key storage unit 27.

In the example of Fig. 4, the portable terminal (a) 2a receives the cipher key data (ab) 41 to share the encrypted communication key with the portable terminal (b) 2b, and receives the cipher key data (ac) 43 to share the encrypted communication key with the portable terminal (c) 2c. Although not shown in Fig. 4, the portable terminal (a) 2a receives other cipher key data not illustrated in Fig. 4, so the portable terminal (a) 2a shares encrypted communication keys with the portable terminal (d) 2d and other portable terminals.

In the above description, for the sake of descriptive simplicity, generation and distribution of the cipher key to enable encrypted communication between two portable terminals are described. However, the present invention is not limited to this. The key management server 1 is also capable of generating and distributing a cipher key to enable encrypted communication among three or more portable terminals.

As described above, as the cipher keys necessary for encrypted communication are generated and distributed by the key management server 1 in a batch manner, each of the portable terminal (a) 2a, portable terminal (b) 2b, portable terminal (c) 2c, and portable terminal (d) 2d only need to manage only one device private key which is specific to the terminal itself and necessary when receiving the cipher key data transmitted from the key management server 1, and only one public key of the key management server; it need not always hold and manage a large number of keys that increase as the number of terminals increases. As each portable terminal does not require a key generation function, it need not be equipped with a complicated arithmetic operation processing performance. This reduces time required before the start of encrypted communication among the portable terminals. Since the cipher key data is distributed by using the communication satellite 7, while the portable terminals can be used over a wide area on the earth, each portable terminal only need to have the data reception unit 21 for reception of data from the communication satellite, and need not be loaded with the function of communicating from the terminal to the communication satellite. As a result, the volume and weight of the portable terminal are not increased, so that the portability can be improved.

In fine, the key distribution and key sharing method according to the first embodiment comprises the key management server 1 provided with a cipher key generating means and a cipher key data distributing means, and a terminal provided with a cipher key setting means. The keymanagement server 1 generates the cipher key to be used for encrypted communication among the terminals, encrypts the cipher key so that it can be decrypted only by a terminal that employs it, and sends the cipher key to the respective terminals one way by broadcast communication. Each terminal decrypts the cipher key data that has been decrypted for it, and stores the decrypted cipher key data in it. Thus, the cipher key used for terminal-to-terminal encrypted communication is distributed.

### Embodiment 2.

In the second embodiment, the operation of key distribution and key sharing by distributing key update data will be described.

First, the outline of the operation of key distribution and key sharing by distributing key update data will be explained.
A key management server 1 generates key update data specific to each key ID 59 and sends the key update data by broadcast communication. Each portable terminal acquires the key update data and updates corresponding key data 57, thus obtaining new key data 57.

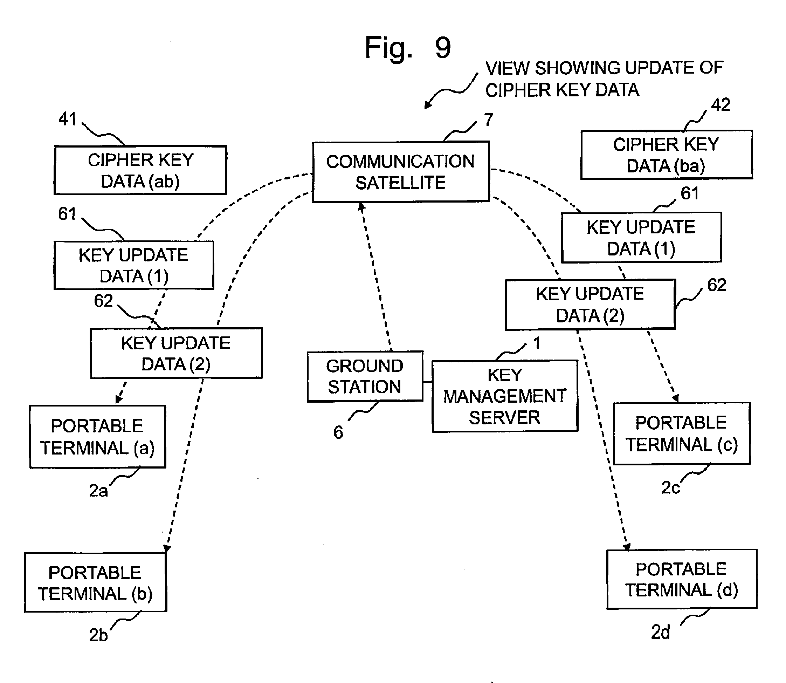

Fig. 9 is a view showing the data flow when the cipher key data is to be updated in the system configuration shown in Fig. 3.
Referring to Fig. 9, cipher key data (ab) 41 is data obtained by encrypting, for the portable terminal (a) 2a as the destination, a cipher key used for encrypted communication between the portable terminal (a) 2a and a portable terminal (b) 2b. Cipher key data (ba) 42 is data obtained by encrypting, for the portable terminal (b) 2b as the destination, a cipher key used for encrypted communication between the portable terminal (a) 2a and portable terminal (b) 2b. Key update data (1) 61 is data used to calculate an updated cipher key (key ID = 2) from a distributed cipher key (key ID = 1). Key update data (2) 62 is data used to calculate an updated cipher key (key ID = 3) from a distributed cipher key (key ID = 2).

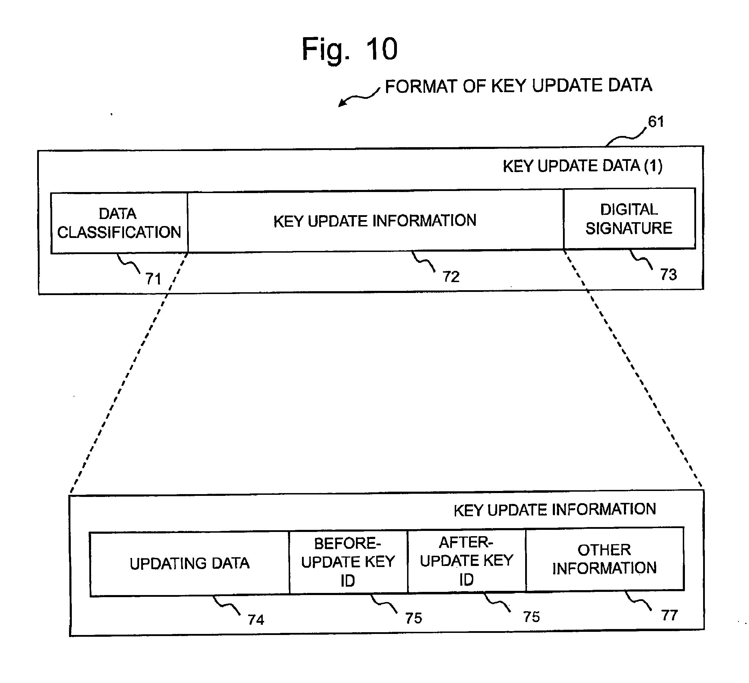

Fig. 10 shows the data format of the key update data (1). 61 in Fig. 9. The data format of the key update data (2) 62 is identical to that of the key update data (1) 61.
Referring to Fig. 10, data classification 71 indicates that the data type is key update data. Key update information 72 is information necessary when updating the cipher key by subjecting it to arithmetic operation with the distributed cipher key. Digital signature 73 is a digital signature calculated from the private key of the key management server 1 for detecting falsification. The digital signature 73 can be omitted. Updating data 74 is to be subjected to arithmetic operation with the distributed cipher key so that an updated cipher key can be calculated. Before-update key ID 75 is the key ID of the distributed cipher key which is to be subjected to arithmetic operation with the updating data 74. In the case of the key update data (1) 61, an ID representing ID = 1 is set as the before-update key ID 75. After-update key ID 76 is the key ID assigned to the updated cipher key obtained by arithmetic operation with the updating data 74. In the case of the key update data (1) 61, an ID representing ID = 2 is set as the after-update key ID 76. Other information 77 is additional information indicating, e.g., the term of validity of the updated cipher key.

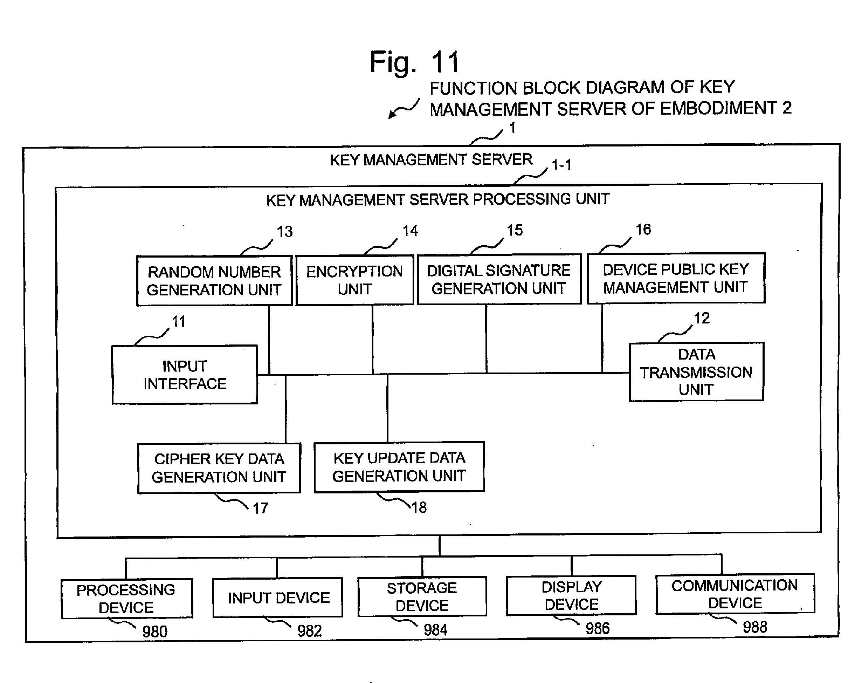

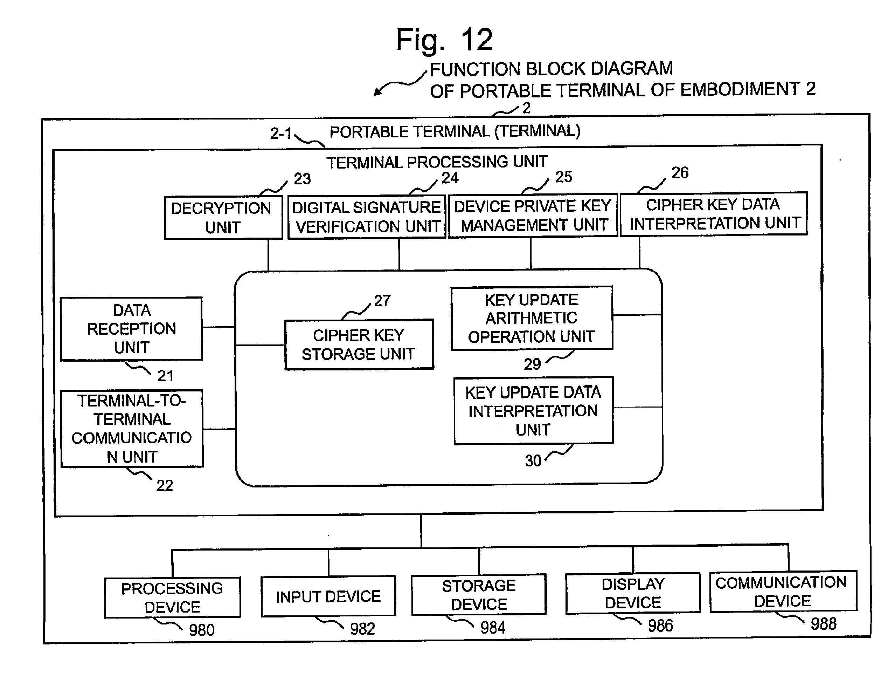

The function of the key management server 1 and that of the portable terminal in the second embodiment will be described with reference to Figs. 11 and 12.
Fig. 11 is a function block diagram showing the function of the key management server 1 of the second embodiment. The key management server 1 of the second embodiment includes, in addition to the server 1 of the first embodiment, a key update data generation unit 18.
The key update data generation unit 18 generates key update data needed to update the cipher key used for encrypted communication among the portable terminals on the basis of random bit string data generated by a random number generation unit 13. In other words, the key update data generation unit 18 generates, with a processing device 980, the key update data which is data needed to update the key data 57 generated by a cipher key data generation unit 17 and common to a plurality of portable terminals.

Fig. 12 is a function block diagram showing the function of the portable terminal of the second embodiment. The portable terminal of the second embodiment includes, in addition to the portable terminal of the first embodiment, a key update arithmetic operation unit 29 and a key update data interpretation unit 30.
The key update arithmetic operation unit 29 obtains a new cipher key from the cipher key stored in a storage device 984 by a cipher key storage unit 27 and key update data received by a data reception unit 21 through arithmetic operation of the processing device 980.
The key update data interpretation unit 30 interprets the key update data received from the key update data (1) 61 by the data reception unit 21.

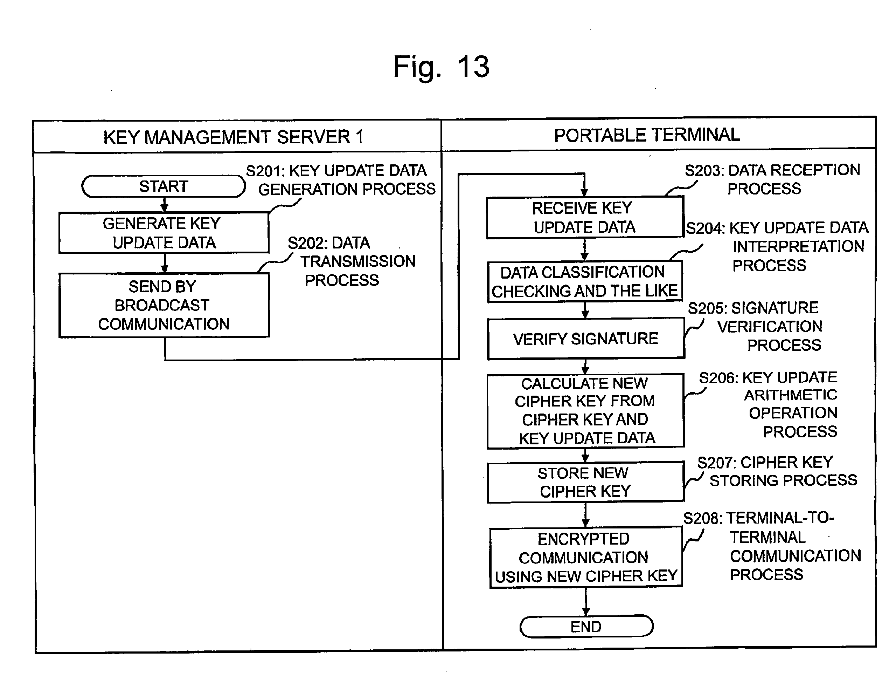

Operation performed by the plurality of portable terminals to share the new cipher key by using the key update data will be described. Fig. 13 is a flowchart showing the operation performed by the plurality of portable terminals to share the new cipher key by using the key update data.

In the following example, note that the key management server 1 has already distributed the cipher key data (ab) 41 and cipher key data (ba) 42 needed to perform encrypted communication between the portable terminal (a) 2a and portable terminal (b) 2b in accordance with the procedure described above. Assume that cipher key information (before encryption) 56 of the cipher key data (ab) 41 and cipher key information (before encryption) 56 of the cipher keydata (ba) 42 have the same content, and that the portable terminal (a) 2a and portable terminal (b) 2b share the same key data 57, the user IDs 58 having IDs indicating the portable terminal (a) 2a and portable terminal (b) 2b, the key ID 59 indicating the key ID = 1, and other information 60 which are the same.

First, the process performed by the key management server 1 will be described.
In a key update data generation process (S201), the key update data generation unit 18 generates the key update data (1) 61 and key update data (2) 62 in order to update the cipher key used for encrypted communication among the respective portable terminals of the system. Unlike the cipher key data, the key update data is common to all the portable terminals. The key update data generation unit 18 generates the updating data 74 by using the random number generation unit 13, and sets before-update key ID 75, after-update key ID 76, and other information 77, thus obtaining the key update information 72. At this time, the before-update key ID 75 indicating the key ID = 1 and the after-update key ID 76 indicating the key ID = 2 are set for the key update data (1) 61, and the before-update key ID 75 indicating the key ID = 2 and the after-update key ID 76 indicating the key ID = 3 are set for the key update data (2) 62. The digital signature 73 may be generated from the key update information 72 by using the private key of the key management server 1 managed by a digital signature generation unit 15. Furthermore, the data classification 71 is set, thus generating the key update data.
In a data transmission process (S202), a data transmission unit 12 transmits the generated key update data (1) 61 and key update data (2) 62 to a communication satellite 7 via a ground station 6 and sends all the key update data from the communication satellite 7 to all the portable terminals by broadcast communication. As the communication from the communication satellite 7 possibly cannot reach the respective portable terminals, each cipher key data is transmitted repeatedly and periodically.

The process performed on the side of the portable terminal will be described.
Each of the portable terminal (a) 2a, the portable terminal (b) 2b, a portable terminal (c) 2c, and a portable terminal (d) 2d receives the key update data transmitted from the communication satellite 7, calculates the updated cipher key data from the cipher key data stored in the storage device 984, and stores the updated cipher key data in the storage device 984.

In a data reception process (S203), the data reception unit 21 of each portable terminal receives data from the communication satellite 7.

In a key update data interpretation process (S204), the key update data interpretation unit 30 checks whether or not the data classification 71 is key update data. If the data classification 71 is key update data, the key update data interpretation unit 30 controls to perform the following process for the key update data.

In a signature verification process (S205), if the key update data includes digital signature 73, a digital signature verification unit 24 verifies the digital signature 73 by using the public key of the key management server 1, thus checking that the cipher key data is not falsified.

In a key update arithmetic operation process (S206), the key update arithmetic operation unit 29 acquires cipher key data having the same key ID from the storage device 984 by referring to the before-update key ID 75, and calculates updated new cipher key data from the cipher key of the acquired cipher key data and the received key update data.

In a cipher key storing process (S207), the cipher key storage unit 27 stores the new cipher key data calculated by the key update arithmetic operation unit 29 in the storage device 984 as the cipher key data of the key ID specified by the after-update key ID 76.

In a terminal-to-terminal communication process (S208), the terminal-to-terminal communication unit 22 performs encrypted communication by using the new cipher key data stored in the cipher key storage unit 27.

In the example of Fig. 9, the portable terminal (a) 2a and portable terminal (b) 2b share the cipher key data of the key ID = 2 through reception of the key update data (1) 61, and share the cipher key data of the key ID = 3 through reception of the key update data (2) 62. Although not shown in Fig. 9, the key data for encrypted communication with other terminals can be updated by performing arithmetic operation of the key update data and other cipher key data (not shown).

As described above, as the key update data necessary for updating the cipher key is generated and distributed by the key management server 1 in a batch manner, each of the portable terminal (a) 2a, portable terminal (b) 2b, portable terminal (c) 2c, and portable terminal (d) 2d need not generate a cipher key each time its cipher key is to be updated. To allow the portable terminals to share the new cipher key, a method of generating and distributing new cipher key data and a method of generating and distributing key update data are available. As the cipher key data, different data must be generated for each combination of terminals that perform encrypted communication. On the other hand, as the key update data, common data of all the terminals suffices. While the cipher key data must be encrypted at the time of data distribution, the key update data need not be encrypted at the time of data distribution. Therefore, the key update data requires a lower data generation cost than the cipher key data. As a larger number of pieces of key update data can accordingly be generated than the cipher key data, if both the cipher key data and key update data are distributed together, the key can be updated more frequently. For example, if cipher key data is to be generated and distributed every 6 hours, the key can only be updated four times a day. If, however, cipher key data is generated and distributed once a day at 0: 00 a.m. and key update data is generated and distributed at every hour but 0:00 a.m., then the key can be updated every hour, that is, 24 times a day.

In fine, in the key distribution and key sharing method according to the second embodiment, the key management server 1 includes a key update data generating means and a key update data distributing means, and each terminal includes a cipher key arithmetic operation means employing key update data. The key management server 1 sends the common key update data common to all the terminals one way by broadcast communication to the respective terminals. Each terminal calculates the updated cipher key from the distributed cipher key and the key update data. Thus, the cipher key used for terminal-to-terminal encrypted communication is distributed.

### Embodiment 3.

In the third embodiment, the operation of key distribution and key sharing by transferring cipher key data among portable terminals will be described.

First, the outline of the operation of key distribution and key sharing by transferring the cipher key data among the portable terminals will be described.

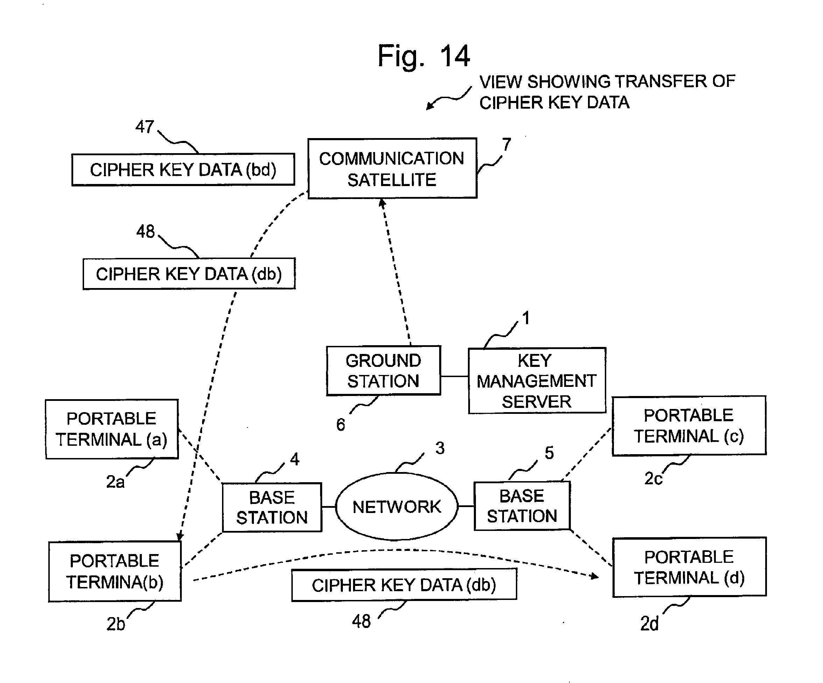

Fig. 14 is a view showing the data flow when transferring the cipher key data in the system configuration shown in Fig. 3.
Referring to Fig. 14, cipher key data (bd) 47 is data obtained by encrypting, for the portable terminal (b) 2b as the destination, a cipher key used for encrypted communication between a portable terminal (b) 2b and a portable terminal (d) 2d. Cipher key data (db) 48 is data obtained by encrypting, for the portable terminal (d) 2d as the destination, a cipher key used for encrypted communication between the portable terminal (b) 2b and portable terminal (d) 2d.
In this example, assume that the portable terminal (d) 2d is located outside the service area of a communication satellite 7 and thus cannot receive various types of data from a key management server 1. In view of this, the portable terminal (b) 2b receives the cipher key data (db) 48 sent for the portable terminal (d) 2d as the destination and transfers it to the portable terminal (d) 2d, so that the portable terminal (b) 2b and portable terminal (d) 2d share the cipher key.

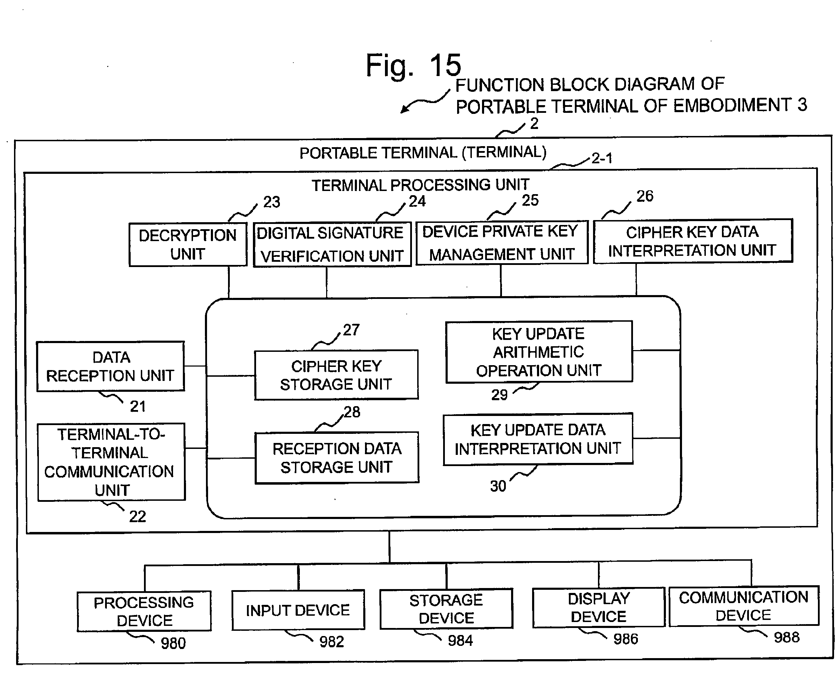

The function of the portable terminal of the third embodiment will be described with reference to Fig. 15. The function of the key management server 1 is the same as that in the second embodiment, and accordingly a repetitive description will be omitted.
Fig. 15 is a function block diagram showing the function of the portable terminal of the third embodiment. The portable terminal of the third embodiment includes, in addition to the portable terminal of the second embodiment, a reception data storage unit 28.
The reception data storage unit 28 stores the cipher key data in a storage device 984 where necessary when the received cipher key data is addressed to another portable terminal and to be used to communicate with its own terminal. More specifically, when a cipher key data interpretation unit 26 determines that the cipher key data received by a data reception unit 21 is not sent by broadcast communication for its own terminal as the destination, the reception data storage unit 28 stores the cipher key data in the storage device 984. Namely, a cipher key storage unit 27 stores the cipher keys used for encrypted communication with other portable terminals, while the reception data storage unit 28 temporarily stores various types of data such as the cipher key data addressed to other terminals.

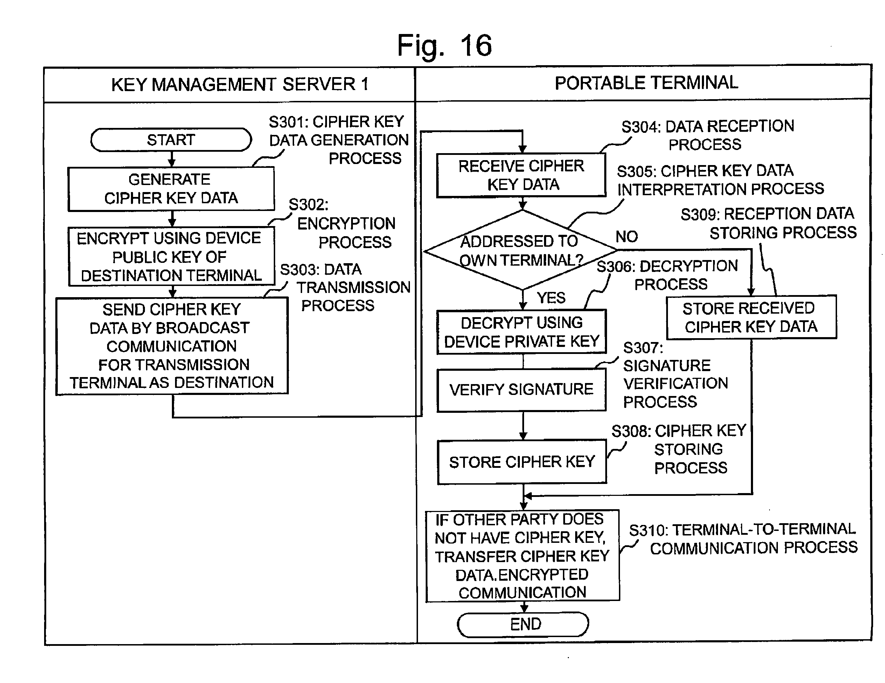

Operation performed by the portable terminal to share the cipher key by transferring the cipher key will be described. Fig. 16 is a flowchart showing the operation performed by the portable terminals to share the cipher key by transferring the cipher key.

The operation of the key management server 1 is identical to that of the first embodiment. Namely, (S301) to (S303) are identical to (S101) to (S103). More specifically, the key management server 1 generates the cipher key data (bd) 47 and cipher key data (db) 48 and sends them to all the portable terminals via the communication satellite 7 by broadcast communication.

The process performed by the portable terminal will now be described.
In a data reception process (S304), a data reception unit 21 of each of a portable terminal (a) 2a, the portable terminal (b) 2b, and a portable terminal (c) 2c which are other than the portable terminal (d) 2d located outside the service area of the communication satellite 7 receives data from the communication satellite 7 in the same manner as in (S104) of the first embodiment.

In a cipher key data interpretation process (S305), the cipher key data interpretation unit 26 checks whether or not data classification 51 is cipher key data. If the data classification 51 is cipher key data, the cipher key data interpretation unit 26 controls to perform the following process for the cipher key data. First, the cipher key data interpretation unit 26 refers to a recipient ID 52 to check whether or not the data is cipher key data addressed to its own terminal. If the cipher key data interpretation unit 26 determines that the data is cipher key data addressed to its own terminal (YES in S305), the procedure advances to (S306). If the cipher key data interpretation unit 26 determines that the data is not cipher key data addressed to its own terminal (NO in S305), the procedure advances to (S309).

Processes of (S306) to (S308) are identical to those of (S106) to (S108) in the first embodiment.

In a reception data storing process (S309), if the cipher key data interpretation unit 26 determines that the data is not cipher key data addressed to its own terminal, the cipher key data interpretation unit 26 refers to concerned-party IDs 53. If the concerned-party IDs 53 include the ID of its own terminal, the reception data storage unit 28 stores the data in the storage device 984 in the original form of cipher key data.

In a terminal-to-terminal communication process (S310), first, a terminal-to-terminal communication unit 22 checks with a processing device 980 whether or not the other party terminal to communicate with by encrypted communication has a cipher key used for the encrypted communication. If the terminal-to-terminal communication unit 22 determines that the other party terminal has the cipher key used for encrypted communication, the terminal-to-terminal communication unit 22 performs encrypted communication in the same manner as in (S109) of the first embodiment. If the terminal-to-terminal communication unit 22 determines that the other party terminal does not have the cipher key used for encrypted communication, the reception data storage unit 28 retrieves from the cipher key data stored in the storage device 984 the cipher key data sent by broadcast communication for the other party terminal as the destination. Then, the terminal-to-terminal communication unit 22 transmits the cipher key data retrieved by the reception data storage unit 28 to the other party terminal. The terminal thus shares the cipher key with the other party terminal and performs encrypted communication.

In the example of Fig. 14, the portable terminal (b) 2b receives the cipher key data (bd) 47. The cipher key information for communication with the portable terminal (d) 2d is acquired, and the cipher key storage unit 27 stores it in the storage device 984. The cipher key data (db) 48 is received, and the reception data storage unit 28 stores it in the storage device 984 in the original form.
At the start of encrypted communication with another portable terminal, if one communication party terminal notices that the other communication party terminal does not have the cipher key, the reception data storage unit 28 of the former portable terminal retrieves the storage device 984. If cipher key data with a recipient ID 52 that coincides with the other communication party is found, the terminal-to-terminal communication unit 22 transmits it to the other communication party terminal. If a party not having a cipher key requests encrypted communication and thereafter transfers cipher key data, the requested portable terminal treats the cipher key data received by its terminal-to-terminal communication unit 22 in the same manner as the cipher key data received by the data reception unit 21. Then, the cipher key information is extracted in accordance with the same procedure as that described above, and is stored in the storage device 984.

In the example of Fig. 14, when the portable terminal (b) 2b is to start encrypted communication with the portable terminal (d) 2d, it is turned out that the portable terminal (d) 2d does not have the cipher key. The cipher key data 48 retrieved from the storage device 984 by the reception data storage unit 28 is transferred to the portable terminal (d) 2d. The portable terminal (d) 2d receives the cipher key data 48 transferred from the portable terminal (b) 2b, and acquires the cipher key information for communication with the portable terminal (b) 2b and stores it in the storage device 984. The portable terminal (d) 2d then starts encrypted communication with the portable terminal (b) 2b.

As described above, even if one portable terminal of the two parties that are to perform encrypted communication cannot receive cipher key data from the key management server 1, the other portable terminal transfers the necessary cipher key data to it. Thus, as far as either one portable terminal can receive various types of data from the key management server 1, the two portable terminals can perform encrypted communication with each other.

In fine, in the key distribution and sharing method of the third embodiment, each terminal is provided with a cipher key data transfer means. At the start of terminal-to-terminal encrypted communication, if one communication party terminal notices that the other communication party terminal does not have a cipher key necessary for encrypted communication, it receives the cipher key data encrypted and distributed for the other in place of the other, and transfers it to the other. Thus, the cipher key employed for terminal-to-terminal encrypted communication is shared by the two parties.

### Embodiment 4.

In the fourth embodiment, the operation of key distribution and key sharing by generating and transmitting spare key data will be described.

First, the outline of the operation of key distribution and key sharing by generating and transmitting the spare key data will be described.

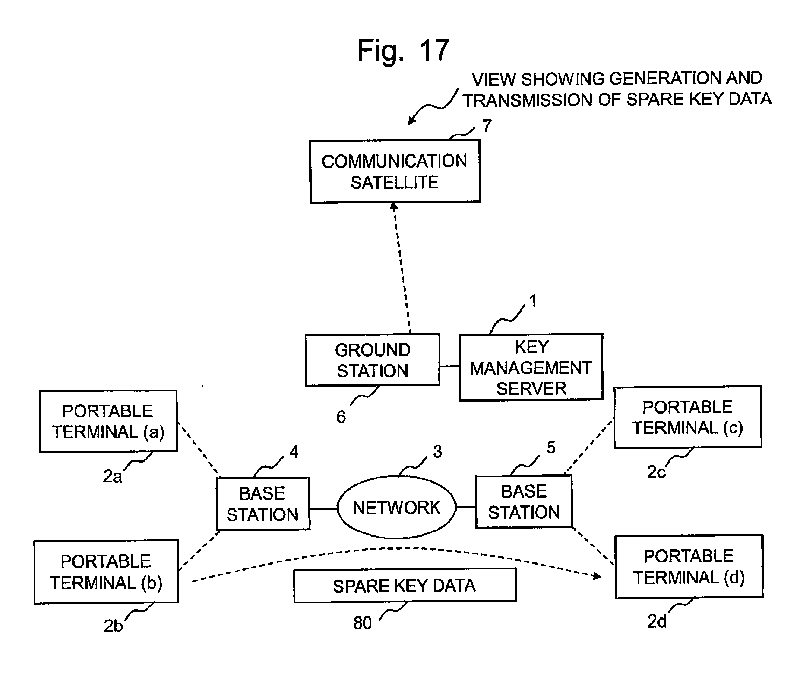

Fig. 17 is a view showing the data flow when generating and transmitting the spare key data in the system configuration shown in Fig. 3. The spare key data is data including a key which is to be temporarily used when, e.g. , none of the portable terminals that are to perform encrypted communication can receive the cipher key.
A predetermined portable terminal transmits the spare key data in advance to another portable terminal by encrypted communication and shares the spare key data with it. In Fig. 17, a portable terminal (b) 2b transmits spare key data 80 to a portable terminal (d) 2d so that the portable terminal (b) 2b and portable terminal (d) 2d share the spare key data 80. For example, when the portable terminal (b) 2b and portable terminal (d) 2d cannot communicate with a key management server 1, the portable terminal (b) 2b and portable terminal (d) 2d can perform encrypted communication by using the spare key that they share.
The spare key data 80 is data including the spare key generated in the portable terminal (b) 2b and to be used for encrypted communication with the portable terminal (d) 2d.

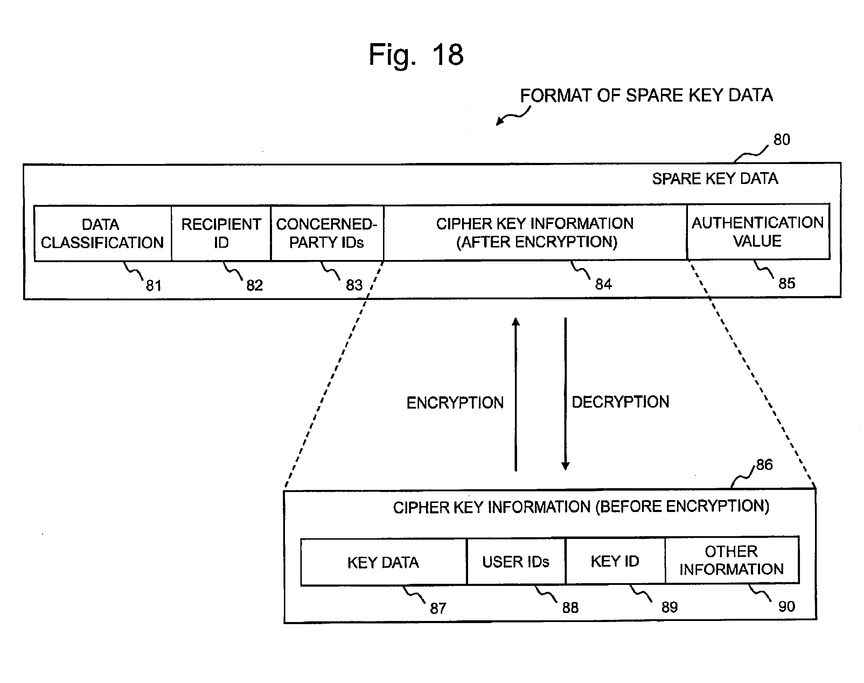

The spare key data to be communicated between the portable terminals will be described with reference to Fig. 18. Fig. 18 shows the data format of the spare key data 80 in Fig. 17.
Referring to Fig. 18, data classification 81 is a flag indicating that the data type is spare key data. Recipient ID 82 is an ID representing a portable terminal as the recipient of the cipher key data. When the data is the spare key data 80, an ID representing the portable terminal (d) 2d is set as the recipient ID 82. Concerned-party IDs 83 are IDs (a plurality of IDs can be specified) representing portable terminals, other than the recipient of the spare key data, which use the same cipher key. When the data is the spare key data 80, an ID representing the portable terminal (b) 2b is set as the concerned-party ID 83. Cipher key information (after encryption) 84 is a content obtained by encrypting the content of cipher key information (before encryption) 86 for the recipient. Authentication value 85 is a falsification detection check value calculated from the content of the cipher key information (before encryption) 86.
The cipher key information (before encryption) 86 is the content of the cipher key used for encrypted communication between the portable terminals. Key data 87 is a cipher key and includes information such as the type and parameters of encryption algorithm which is necessary when the key data 87 is to be used as a key. User IDs 88 are the IDs (a plurality of IDs can be specified) of portable terminals that use the key data 87. When the data is the spare key data 80, an ID representing the portable terminal (b) 2b and an ID representing the portable terminal (d) 2d are set as the user IDs 88. In other words, information on both the recipient ID 82 and concerned-party IDs 83 are set as the user IDs 88. Key ID 89 is an ID assigned to correspond to the key data 87 for the same user IDs 88 by one to one correspondence. As the key ID 89, a value specially classified to indicate a spare key is specified. Other information 90 is additional information such as the term of validity of the cipher key.

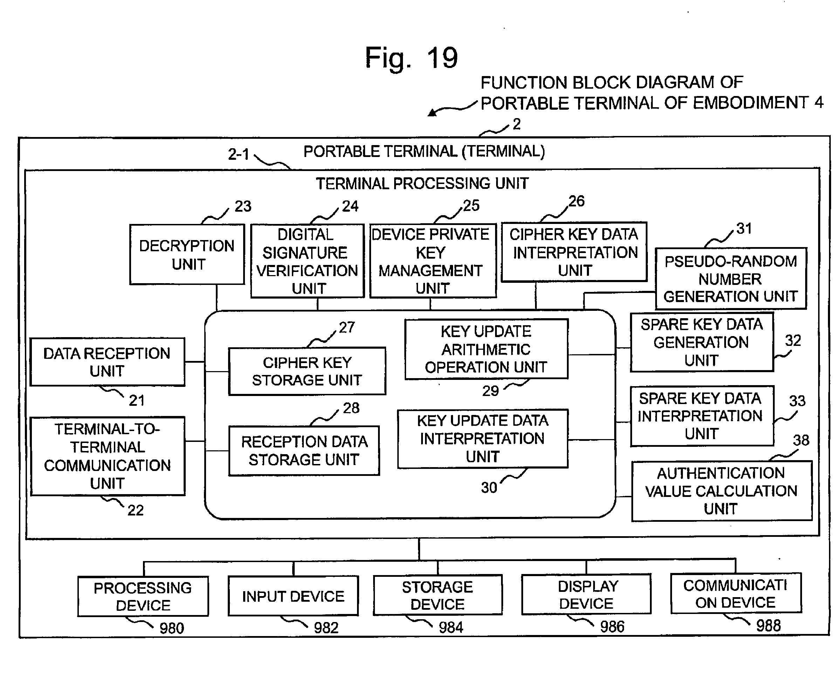

The function of the portable terminal according to the fourth embodiment will be described with reference to Fig. 19. The function of the key management server 1 is the same as that of the second embodiment, and its repetitive description will be omitted.
Fig. 19 is a function block diagram showing the function of the portable terminal of the fourth embodiment. The portable terminal of the fourth embodiment has, in addition to the portable terminal of the third embodiment, a pseudo-random number generation unit 31, a spare key data generation unit 32, a spare key data interpretation unit 33, and an authentication value calculation unit 38.
The pseudo-random number generation unit 31 generates random bit string data to be used as the spare key.
On the basis of the random bit string data generated by using the pseudo-random number generation unit 31, the spare key data generation unit 32 generates, with a processing device 980, spare key data employed to distribute a spare key used for encrypted communication with another portable terminal.
The spare key data interpretation unit 33 interprets spare key data received by a data reception unit 21 from anther portable terminal and stores a spare cipher key in a storage device 984.
The authentication value calculation unit 38 of the portable terminal on the spare key transmission side calculates, with the processing device 980, an authentication value to detect falsification of the spare key data generated by the spare key data generation unit 32, by using the cipher key that a terminal-to-terminal communication unit 22 uses for encrypted communication. The authentication value calculation unit 38 of the portable terminal on the spare key reception side confirms that the received spare key data is not falsified based on the authentication value generated by the authentication value calculation unit 38 of the transmission-side portable terminal.

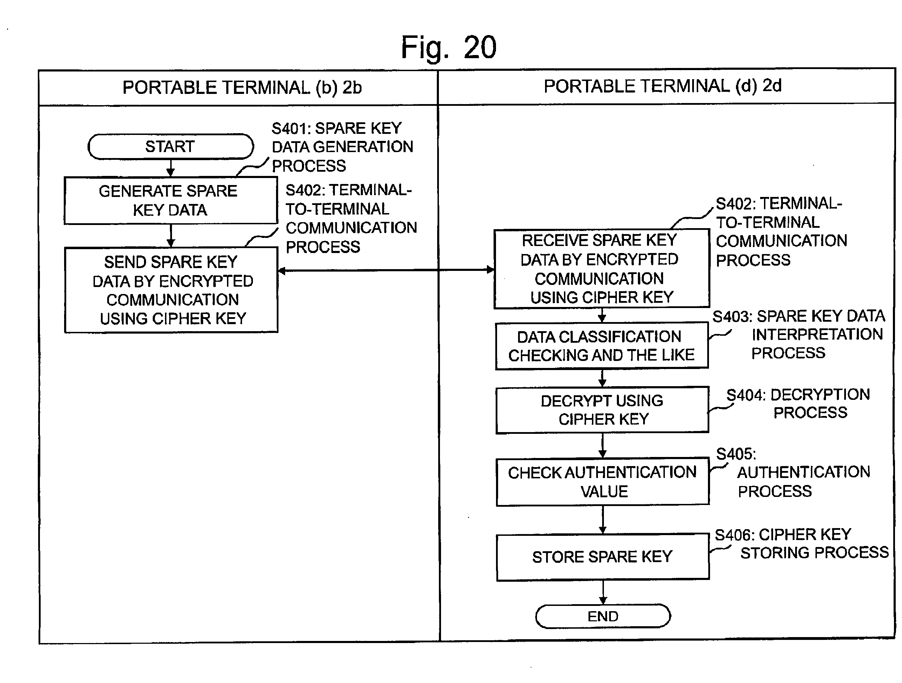

The operation of sharing the spare key data between the portable terminals will be described with reference to Fig. 20. Fig. 20 is a flowchart showing the operation of sharing the spare key data between the portable terminals. In Fig. 20, a case will be described, based on the example shown in Fig. 17, in which the spare key data is transmitted from the portable terminal (b) 2b to the portable terminal (d) 2d so that it is shared by them.

First, the process by the portable terminal (b) 2b to generate the spare key data will be described.
In a spare key data generation process (S401), the spare key data generation unit 32 of the portable terminal (b) 2b generates spare key data 80 during or before encrypted communication with the portable terminal (d) 2d, in order to distribute a spare key to be used for encrypted communication. The spare key data generation unit 32 generates key data 87, which is the cipher key, by using the pseudo-random number generation unit 31, and sets user IDs 88, key ID 89, and other information 90, thus generating cipher key information (before encryption) 86. The spare key data generation unit 32 also generates the spare key data 80 by setting data classification 81, recipient ID 82, and concerned-party IDs 83.

In a terminal-to-terminal communication process (S402), the spare key data generation unit 32 generates cipher key information 84 (after encryption) from the cipher key information (before encryption) 86 by using the encryption function of the terminal-to-terminal communication unit 22 and by using the cipher key which is in use for encrypted communication with the portable terminal (d) 2d. The terminal-to-terminal communication unit 22 then transmits the generated spare key data 80 to the portable terminal (d) 2d via a base station 4, a network 3, and a base station 5. The authentication value calculation unit 38 generates an authentication value 85 by using the cipher key which is employed by the terminal-to-terminal communication unit 22 for encrypted communication.

The process by the portable terminal (d) 2d that has received the spare key data will be described.
In the above terminal-to-terminal communication process (S402), the data reception unit 21 of the portable terminal (d) 2d receives the spare key data 80 transmitted from the portable terminal (b) 2b.

In a spare key data interpretation process (S403), when the terminal-to-terminal communication unit 22 receives data from the portable terminal (b) 2b, the spare key data interpretation unit 33 checks whether or not the data classification 81 is spare key data. If the spare key data interpretation unit 33 determines that the data classification 81 is spare key data, it controls to perform the following process for the spare key data. First, the spare key data interpretation unit 33 refers to the recipient ID 82 to check that the received spare key data is addressed to its own terminal.

In a decryption process (S404), the terminal-to-terminal communication unit 22 decrypts the cipher key information (before encryption) 86 from the cipher key information (after encryption) 84 by using the decryption function of the terminal-to-terminal communication unit 22 and by using the cipher key which is employed for encrypted communication with the portable terminal (b) 2b.

In an authentication process (S405), the authentication value calculation unit 38 calculates the authentication value for the decrypted cipher key information (before encryption) 86 by using the cipher key which is in use for encrypted communication, and compares the calculated authentication value with the authentication value 85 to check if no falsification is made.

In a cipher key storing process (S406), if no falsification is detected, a cipher key storage unit 27 stores the spare key data in the storage device 984.

More specifically, in a predetermined case, the terminal-to-terminal communication unit 22 transmits the spare key data generated by the spare key data generation unit 32 to predetermined, another terminal by encrypted communication using the cipher key, and shares the spare key data with it. If, e.g., encrypted communication cannot be performed using the cipher key, the terminal-to-terminal communication unit 22 performs encrypted communication by using spare key data which is shared in advance.

In the above description, for the sake of simplicity, generation and distribution of the spare key to perform encrypted communication between two portable terminals is described. However, the present invention is not limited to this. A spare key to perform encrypted communication among three or more portable terminals can be generated and distributed by each portable terminal.

As described above, when, e.g., the portable terminals have enough capacities during encrypted communication with each other, one portable terminal generates a spare key and distributes it to the other portable terminal. Even if the two terminals cannot receive the cipher key data or key update data from the key management server 1, the key can be updated by using the spare key.

In fine, in the key distribution and key sharing method according to the fourth embodiment, each terminal is provided with a spare key generating means, a spare key distributing means, and a spare key setting means which are to be used when cipher key data distributed by the key management server 1 cannot be received. During terminal-to-terminal encrypted communication, one terminal generates a spare key and transmits it to the other communication party terminal, and the other terminal receives it. The other terminal uses the spare key when it cannot receive the cipher key data distributed by the key management server 1.

### Embodiment 5.

In the fifth embodiment, the operation of key distribution and key sharing by using arithmetic operation with secret information will be described.

The outline of key distribution and key sharing by using arithmetic operation with secret information will first be described.

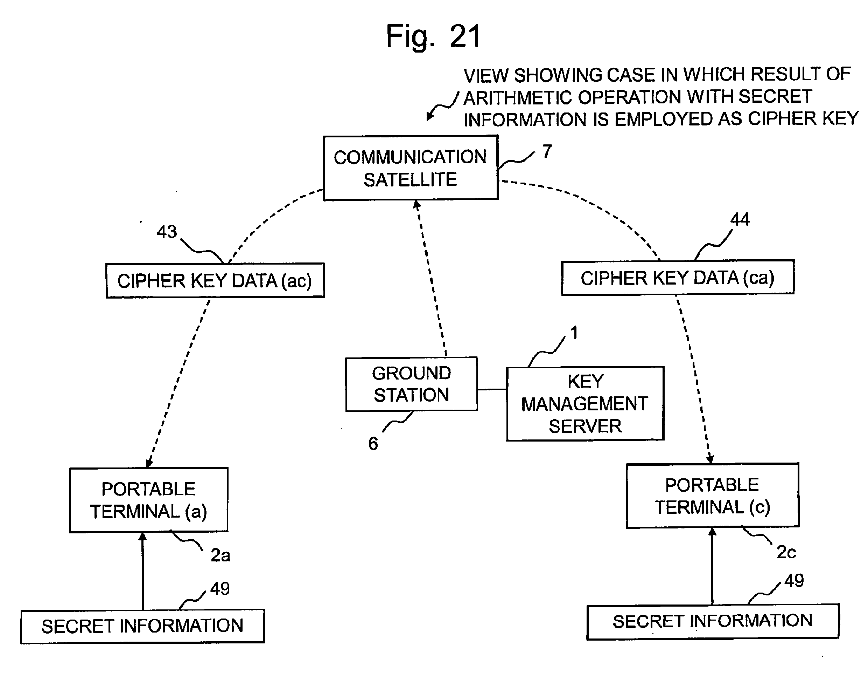

Fig. 21 is a view showing the data flow when the result of arithmetic operation with the secret information is employed as a cipher key in the system configuration shown in Fig. 3.
Referring to Fig. 21, cipher key data (ac) 43 is data obtained by encrypting, for the portable terminal (a) 2a as the destination, a cipher key used for encrypted communication between a portable terminal (a) 2a and a portable terminal (c) 2c. Cipher key data (ca) 44 is data obtained by encrypting, for the portable terminal (c) 2c as the destination, a cipher key used for encrypted communication between the portable terminal (a) 2a and portable terminal (c) 2c. Secret information 49 is secret information shared by the users of the portable terminal (a) 2a and portable terminal (c) 2c in advance.
The portable terminal (a) 2a and portable terminal (c) 2c calculate a new cipher key from a cipher key received from a key management server 1 and the secret information 49 in accordance with a predetermined method. The portable terminal (a) 2a and portable terminal (c) 2c perform encrypted communication using the new cipher key.

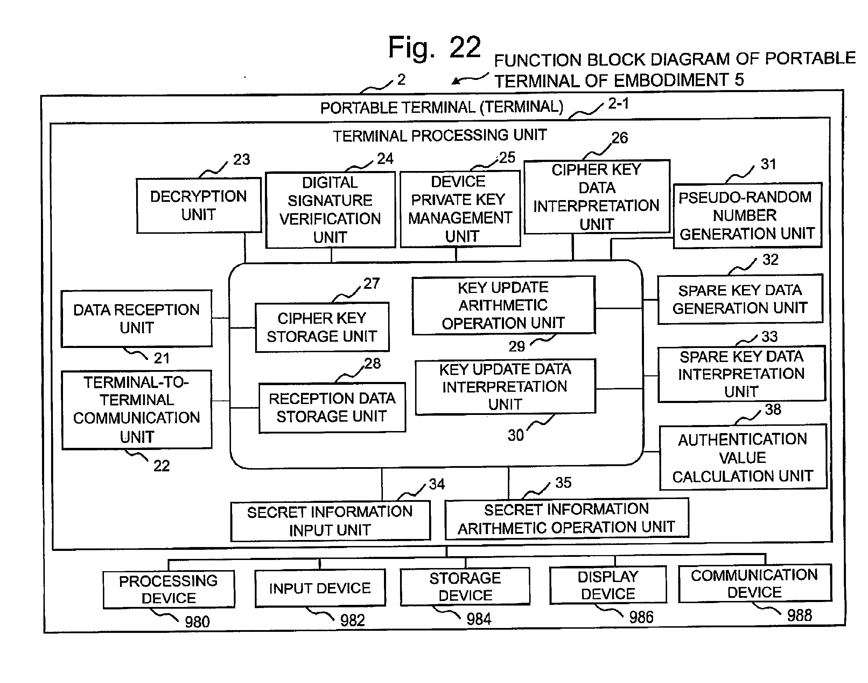

The function of the portable terminal of the fifth embodiment will be described with reference to Fig. 22. The function of the keymanagement server 1 is the same as that of the second embodiment, and a repetitive description will be omitted.
Fig. 22 is a function block diagram showing the function of the portable terminal of the fifth embodiment. The portable terminal of the fifth embodiment has, in addition to the portable terminal of the fourth embodiment, a secret information input unit 34 and a secret information arithmetic operation unit 35.
The secret information input unit 34 receives secret information, shared by the user of the portable terminal and the user of another portable terminal in advance, via an input device 982.
The secret information arithmetic operation unit 35 performs arithmetic operation of the cipher key stored in a storage device 984 and the secret information input by the secret information input unit 34, in place of directly using the cipher key for encrypted communication with another portable terminal. In other words, the secret information arithmetic operation unit 35 generates, with a processing device 980, a new cipher key based on the cipher key and the secret information which is input by the secret information input unit 34, in accordance with a predetermined method shared with the other terminal. The obtained result is used as the cipher key for encrypted communication with the other portable terminal.

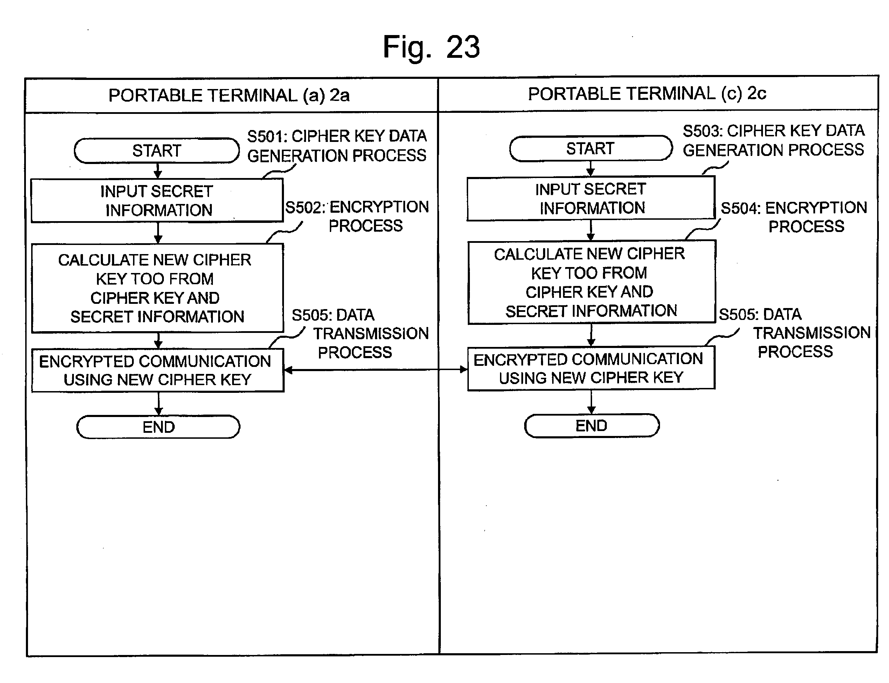

The operation of performing encrypted communication using the key data calculated based on the secret information will be described with reference to Fig. 23. Fig. 23 is a flowchart showing the operation of performing encrypted communication using the key data calculated based on the secret information.
In this example, the key management server 1 distributes the cipher key data (ac) 43 and cipher key data (ca) 44 which are to be used for performing encrypted communication between the portable terminal (a) 2a and portable terminal (c) 2c in accordance with the procedure indicated earlier. Assume that cipher key information (before encryption) 56 of the cipher key data (ac) 43 and cipher key information (before encryption) 56 of the cipher key data (ca) 44 have the same content which includes the same key data 57, user IDs 58 having IDs indicating the portable terminal (a) 2a and portable terminal (c) 2c, key ID 59 indicating the same key ID, and other information 60 which is the same.

In a secret information input process (S501), when the portable terminal (a) 2a is to perform encrypted communication with the portable terminal (c) 2c, the secret information 49 is input to the secret information input unit 34 of the portable terminal (a) 2a. Similarly, in a secret information input process (S503), when the portable terminal (c) 2c is to perform encrypted communication with the portable terminal (a) 2a, the secret information 49 is input to the secret information input unit 34 of the portable terminal (c) 2c.
In secret information arithmetic operation processes (S502) and (S504), when the secret information 49 is input to the secret information arithmetic operation units 35 of the portable terminal (a) 2a and portable terminal (c) 2c via the secret information input units 34, respectively, the cipher key and the secret information 49 are subjected to a predetermined arithmetic operation.
In a terminal-to-terminal communication process (S505), a terminal-to-terminal communication unit 22 of the portable terminal (a) 2a and a terminal-to-terminal communication unit 22 of the portable terminal (c) 2c employ the arithmetic operation result of the secret information arithmetic operation units 35 as the new cipher key, in place of the cipher key included in the key data 57, and perform encrypted communication between the two terminals.

In the above description, for the sake of simplicity, key distribution and key sharing between the two portable terminals by performing arithmetic operation with the secret information have been described. However, the present invention is not limited to this. Key distribution and key sharing among three or more portable terminals by performing arithmetic operation with secret information is also possible.

As described above, in encrypted communication between the portable terminal (a) 2a and portable terminal (c) 2c, encrypted communication is performed by using, as the cipher key, the result of arithmetic operation with the secret information 49 shared in advance by the users of the respective terminals, in place of the cipher key generated and distributed by the key management server 1. Therefore, encrypted communication can be performed in such a manner that even the key management server 1 cannot decrypt the content of the encrypted communication between the two terminals.

In fine, in the key distribution and key sharing method according to the fifth embodiment, each terminal is provided with a cipher key arithmetic operation means for calculating a cipher key from the secret information and cipher key data. Each terminal uses, as a cipher key, the result of arithmetic operation with the secret information input by the user of the terminal, in place of using the content obtained by decrypting the cipher key data received from the key management server 1. Thus, the cipher key to be used for encrypted communication among the terminals is shared.

### Embodiment 6.

The operation of key disposal by distributing revocation information will be described.

The outline of the operation of key disposal by distributing revocation information 99 (key revocation information) will first be described.

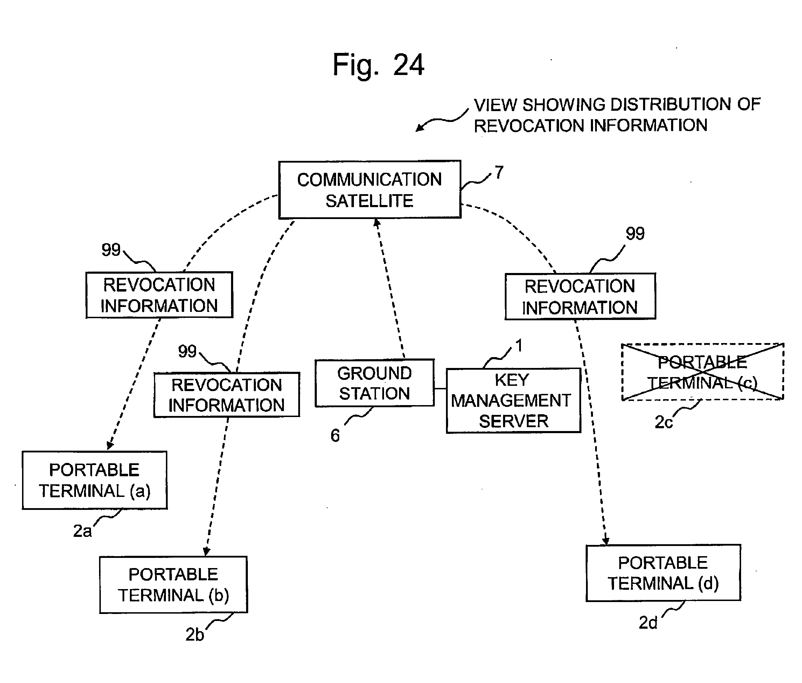

Fig. 24 is a view showing the data flow when distributing the revocation information 99 in the system configuration shown in Fig. 3.
Referring to Fig. 24, the revocation information 99 is information to transmit to another portable terminal that a portable terminal is to be invalidated because it is, e.g., stolen or lost. A key management server 1 sends the revocation information 99 by broadcast communication, thereby informing the respective portable terminals of revocation of a predetermined portable terminal.

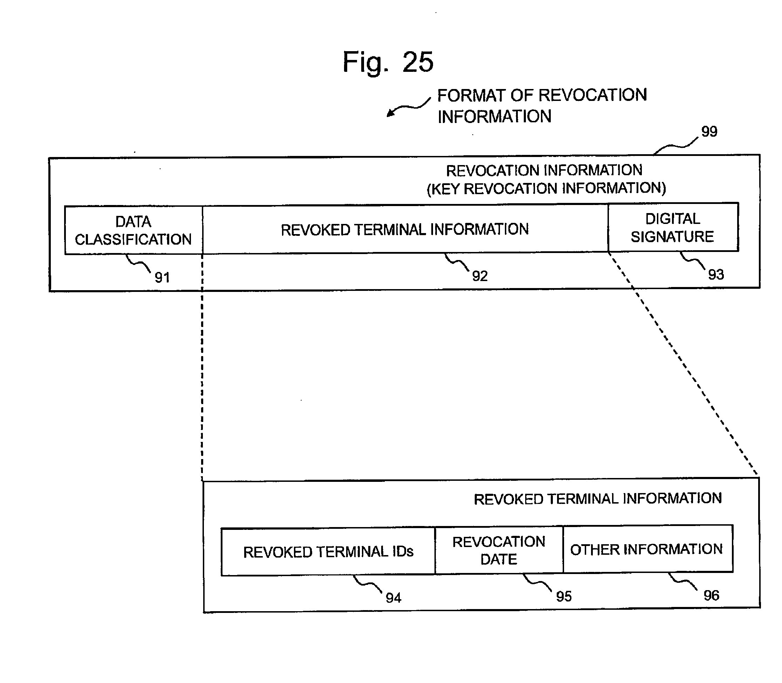

Fig. 25 is a view showing the data format of the revocation information 99 in Fig. 24.
Referring to Fig. 25, data classification 91 is a flag indicating that the data type is revocation information 99.
Revoked terminal information 92 is information on a terminal to be subjected to a revocation process. Digital signature 93 is a digital signature calculated from the private key of the key management server 1 to detect falsification by referring to the content of the revoked terminal information 92. Revoked terminal IDs 94 are the IDs (a plurality of IDs can be specified) of terminals to be subjected to the revocation process. Revocation date 95 represents the date when the revocation process is instructed. Other information 96 is additional information such as the reason of revocation.

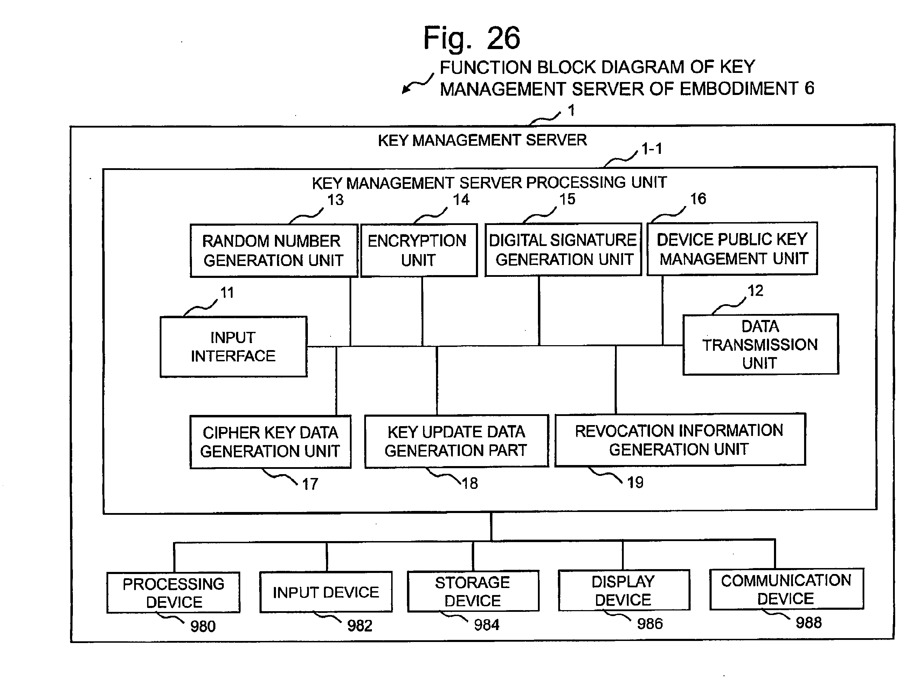

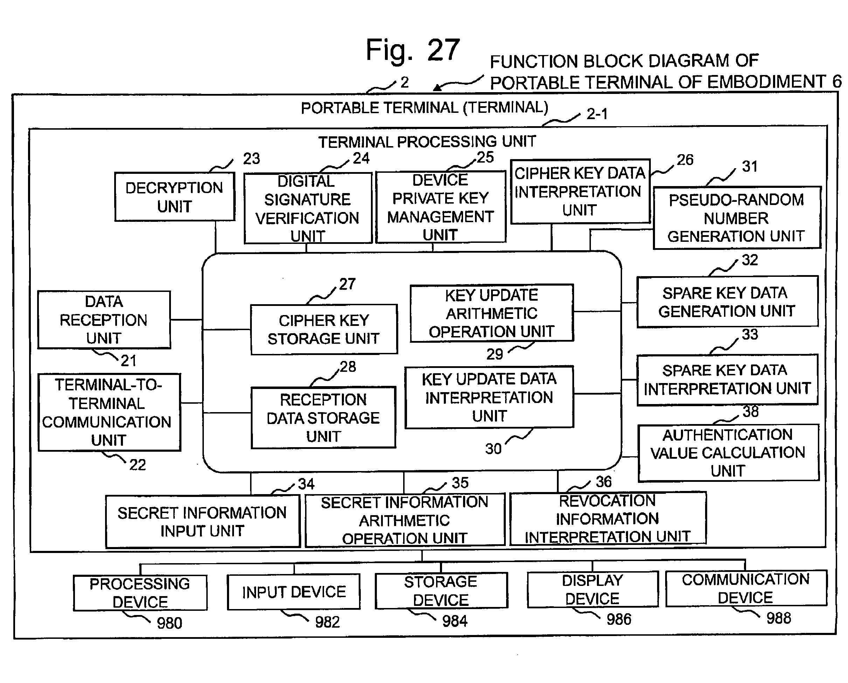

The function of the key management server 1 and the function of the portable terminal in the sixth embodiment will be described with reference to Figs. 26 and 27.
Fig. 26 is a function block diagram showing the function of the key management server 1 in the sixth embodiment. The key management server 1 in the sixth embodiment includes a revocation information generation unit 19 in addition to the key management server 1 of the second embodiment.
When a portable terminal is lost or stolen, the revocation information generation unit 19 generates the revocation information 99 (key revocation information) to instruct and inform that all cipher keys related to the lost or stolen terminal should be disposed of. In other words, the revocation information generation unit 19 generates, with a processing device 980, the revocation information 99 instructing disposal of cipher keys to be used for encrypted communication with a disabled terminal which is a terminal whose predetermined function should be disabled.

Fig. 27 is a function block diagram showing the function of the portable terminal of the sixth embodiment. The portable terminal of the sixth terminal includes a revocation information interpretation unit 36 in addition to the portable terminal of the fifth embodiment.
The revocation information interpretation unit 36 interprets the revocation information 99 received by a data reception unit 21 from the key management server 1, and disposes of a cipher key stored in a storage device 984 and corresponding to the revocation information 99. In other words, the revocation information interpretation unit 36 deletes the cipher key to be used for encrypted communication with the disabled terminal from the cipher keys stored in the storage device 984 by using the processing device 980. If the terminal is performing encrypted communication with another terminal by using the cipher key to be deleted, the revocation information interpretation unit 36 breaks the communication immediately.

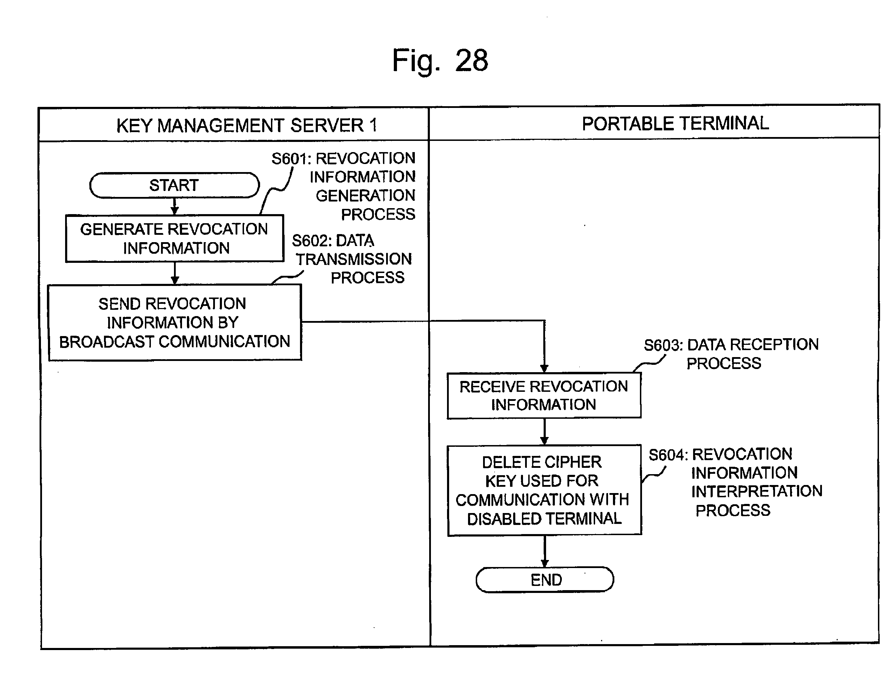

The operation of key disposal by distributing the revocation information 99 will be described with reference to Fig. 28. Fig. 28 is a flowchart showing the operation of key disposal by distributing the revocation information 99.
In this example, assume that a revocation process needs to be performed because a portable terminal (c) 2c is lost. Also assume that the user of the portable terminal (c) 2c accordingly reports to the system administrator that he has lost his portable terminal.

The process by the key management server 1 will be described first. In a revocation information generation process (S601), upon reception of the report that the portable terminal is lost, the system administrator inputs information needed to distribute the revocation information 99 to the key management server 1 via an input interface 11, and instructs that the revocation information 99 must be generated and distributed. The revocation information generation unit 19 generates the revocation information 99 on the portable terminal (c) 2c so that the revocation information 99 is distributed. The revocation information generation unit 19 sets an ID indicating the portable terminal (c) 2c as the revoked terminal IDs 94, the reported date of missing as the revocation date 95, and missing as the reason of revocation for the other information 96, thus generating execute terminal information 92. A digital signature generation unit 15 generates the digital signature 93 by using the private key of the key management server 1. Furthermore, the revocation information generation unit 19 sets the data classification 91, thus generating the revocation information 99.

In a data transmission process (S602), the data transmission unit 12 transmits the revocation information 99 generated by the key management server 1 to a communication satellite 7 via a ground station 6, and the communication satellite 7 sends the revocation information 99 to all the portable terminals by broadcast communication. As the communication from the communication satellite 7 possibly cannot reach the respective portable terminals, the revocation information 99 is transmitted repeatedly and periodically.

The process by the portable terminal will now be described.
Each of a portable terminal (a) 2a, a portable terminal (b) 2b, and a portable terminal (d) 2d which are portable terminals other than the portable terminal (c) 2c receives the revocation information 99 transmitted from the communication satellite 7, and deletes the cipher key related to the revoked terminal from the storage device 984. If a given portable terminal is communicating with the revoked terminal, it breaks the communication immediately.

In a data reception process (S603), the data reception unit 21 of each portable terminal receives data from the communication satellite 7.

In a revocation information interpretation process (S604), the revocation information interpretation unit 36 checks whether or not the data classification 91 is revocation information 99. If the data classification 91 is revocation information 99, the revocation information interpretation unit 36 controls to perform the following process for the revocation information 99. Adigital signature verification unit 24 verifies the digital signature 93 by using the public key of the key management server 1 in order to check that the revocation information 99 has not been falsified. If no falsification is detected, the revocation information interpretation unit 36 refers to the revoked terminal IDs 94 to retrieve from the storage device 984 any cipher key including a terminal ID included in the revoked terminal IDs 94, and deletes all the pertinent cipher keys from the storage device 984. Furthermore, the revocation information interpretation unit 36 checks whether or not the terminal is currently communicating with a portable terminal with a terminal ID included in the revoked terminal IDs 94. If the terminal is communicating with such portable terminal, the revocation information interpretation unit 36 instructs a terminal-to-terminal communication unit 22 to break the communication. Upon reception of the communication breaking instruction, the terminal-to-terminal communication unit 22 breaks the communication.

As described above, when a portable terminal is lost or stolen and the user of the terminal reports this to the system administrator, the key management server 1 generates the revocation information 99 to inform revocation of this portable terminal and distributes the revocation information 99 to all the portable terminals. Thus, communication with the portable terminal which is stolen by an unauthorized user is broken immediately, and further encrypted communication with the unauthorized third party terminal can be prevented.

In fine, in the key distribution and key sharing method of the sixth embodiment, the key management server 1 includes a means for generating the revocation information 99 and a means for distributing the revocation information 99, and each terminal includes a key disposal means which utilizes the revocation information 99. Upon reception of a report from a terminal user stating that his terminal is lost or stolen, the key management server 1 generates the revocation information 99 corresponding to all the cipher keys related to the lost or stolen terminal, and sends the revocation information 99 to the respective terminals one way by broadcast communication. When each terminal receives the revocation information 99, it disposes of the corresponding cipher key. Thus, communication with the lost terminal is stopped immediately.

### Embodiment 7.

In the seventh embodiment, operation of disabling a terminal by transmitting and transferring a terminal disable command 100 (disable command information) will be described.

The outline of the operation of disabling a terminal by transmitting and transferring the terminal disable command 100 will first be described.

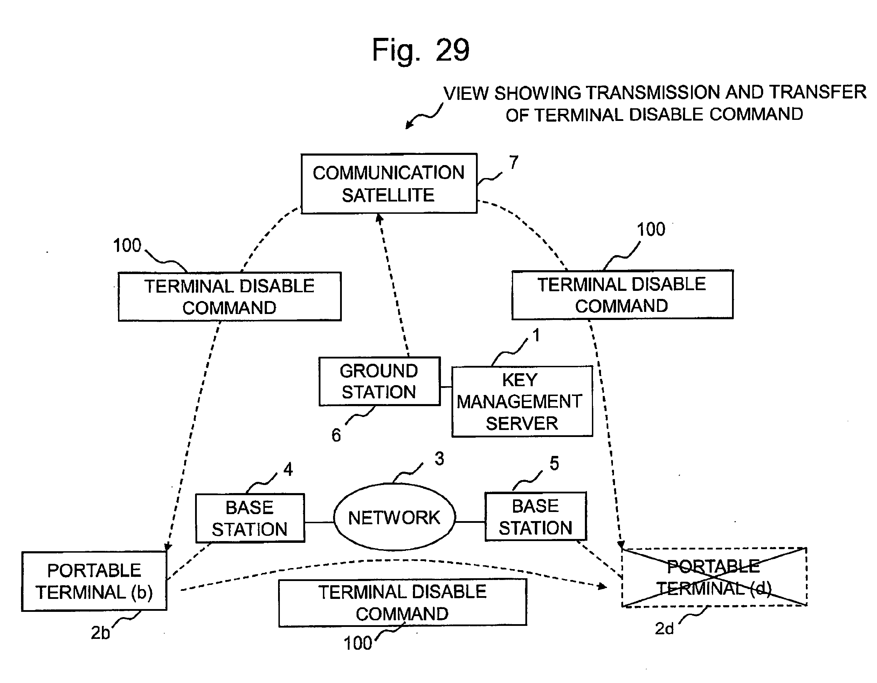

Fig. 29 is a view showing the data flow when transmitting and transferring the terminal disable command 100 in the system configuration shown in Fig. 3.
Referring to Fig. 29, the terminal disable command 100 is instruction information which instructs a stolen or lost portable terminal to be disabled. A key management server 1 sends the terminal disable command 100 by broadcast communication to transmit to the stolen or lost portable terminal information that a predetermined function of it should be disabled. When a portable terminal communicates with another portable terminal, it transfers the terminal disable command 100 to this communication party. Thus, a portable terminal that has failed to receive the terminal disable command 100 from the key management server 1 is informed as well that a predetermined function of it should be disabled.

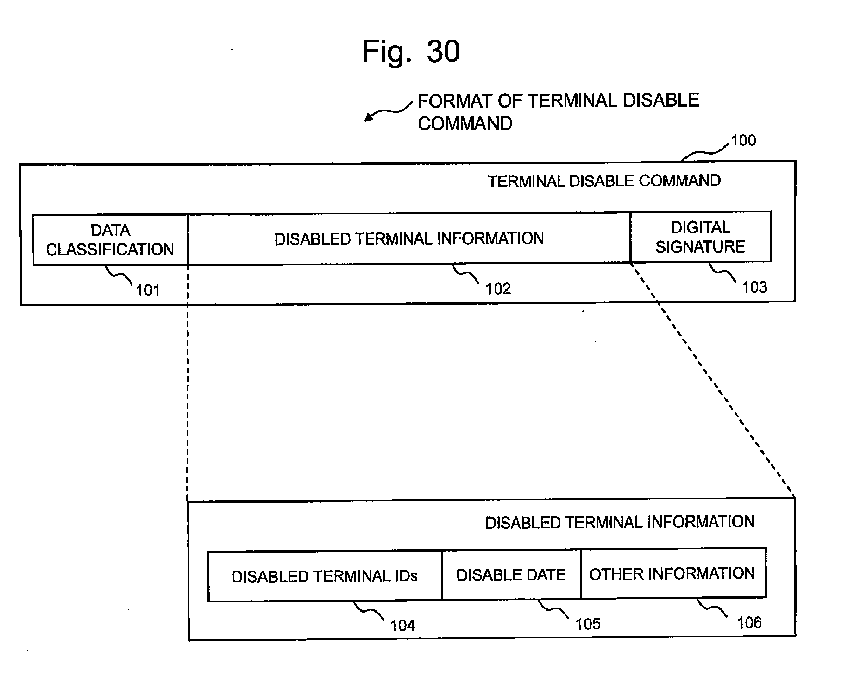

Fig. 30 is a view showing the data format of the terminal disable command 100 in Fig. 29.
Referring to Fig. 30, data classification 101 is a flag indicating that the data type is terminal disable command 100. Disabled terminal information 102 is information on a terminal to be subjected to a disabling process. Digital signature 103 is a digital signature calculated from the private key of the key management server 1 to detect falsification by referring to the content of the disabled terminal information 102. Disabled terminal IDs 104 are the IDs (a plurality of IDs can be specified) of terminals to be subjected to the disabling process. Disable date 105 is the date when the disable command is given. Other information 106 is additional information such as the reason of disabling.

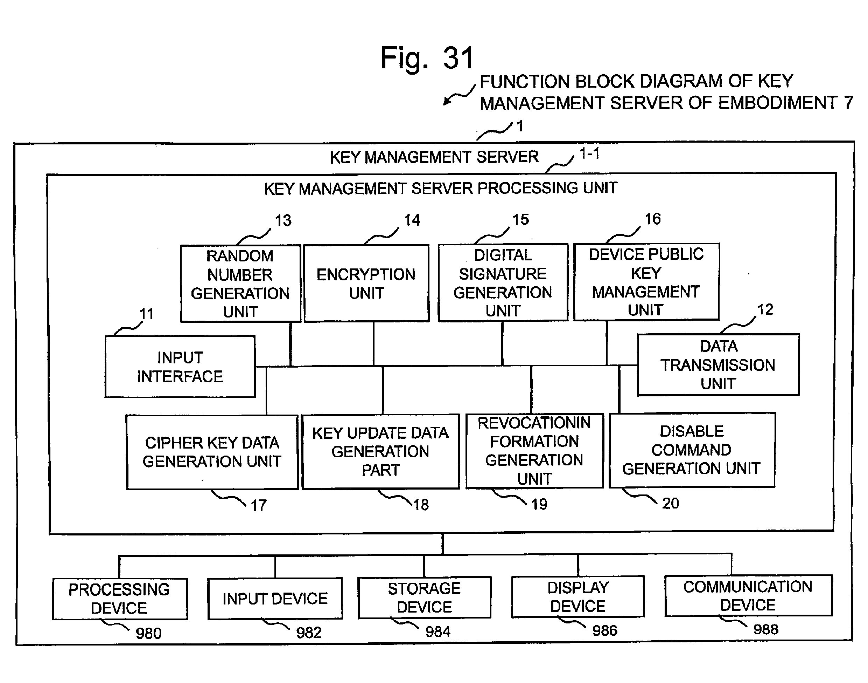

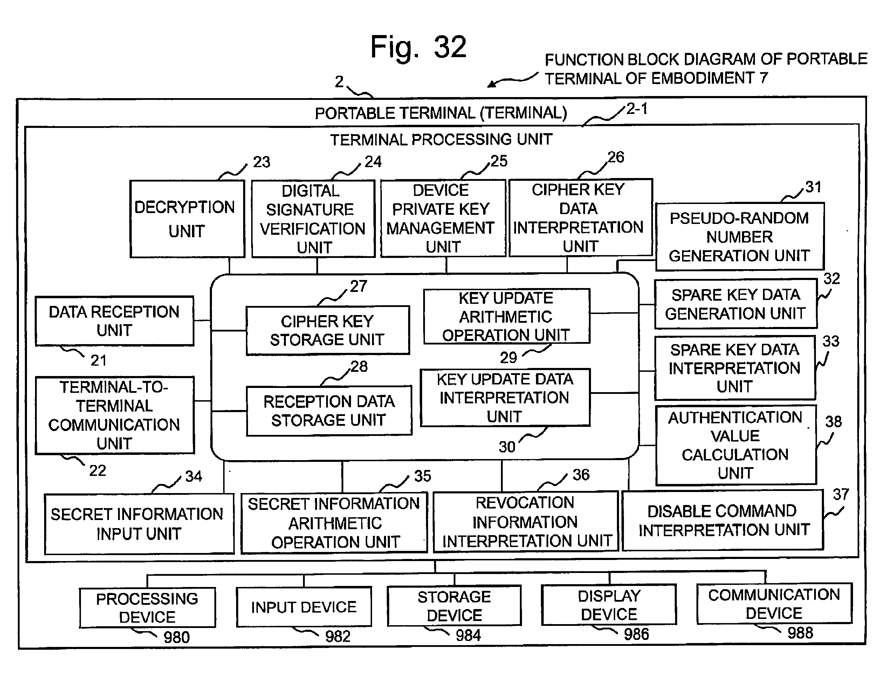

The function of the key management server 1 and the function of the portable terminal in the seventh embodiment will be described with reference to Figs. 31 and 32.
Fig. 31 is a function block diagram showing the function of the key management server 1 of the seventh embodiment. The keymanagement server 1 of the seventh embodiment includes a disable command generation unit 20 in addition to the key management server 1 of the sixth embodiment.
The disable command generation unit 20 generates the terminal disable command 100 which disables the function of the lost or stolen portable terminal 1 to prevent unauthorized use. In other words, the disable command generation unit 20 generates, with a processing device 980, the terminal disable command 100 to instruct a disabled terminal, having a predetermined function to be disabled, to halt its predetermined function.

Fig. 32 is a function block diagram showing the function of the portable terminal of the seventh embodiment. The portable terminal of the seventh embodiment includes a disable command interpretation unit 37 in addition to the portable terminal of the sixth embodiment.
The disable command interpretation unit 37 interprets the terminal disable command 100 received by a data reception unit 21 from the key management server 1. If the terminal disable command 100 is a disable command for its own terminal, terminal disabling operation such as initialization or erasure of internal data is performed. More specifically, the disable command interpretation unit 37 checks whether or not the received disabling data is sent by broadcast communication to its own terminal as the destination. If the disable command interpretation unit 37 determines that the received disabling data is sent by broadcast communication for its own terminal as the destination, it causes the processing device 980 to halt the predetermined function of its own terminal. If the received disabling data is a disable command for another portable terminal, the disable command interpretation unit 37 stores the terminal disable command 100 in a reception data storage unit 28. Upon reception of a communication request from the portable terminal to be disabled, the disable command interpretation unit 37 transfers the terminal disable command 100 by using a terminal-to-terminal communication unit 22.

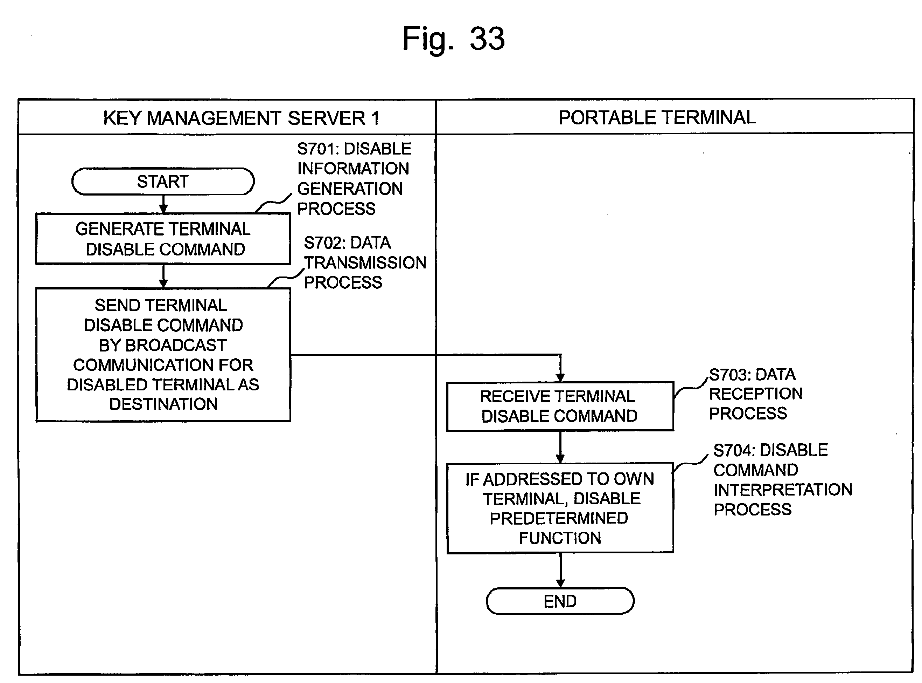

The operation of disabling a terminal by transmitting the terminal disable command 100 will be described with reference to Fig. 33. Fig. 33 is a flowchart showing the operation of disabling the terminal by transmitting the terminal disable command 100.
In this example, assume that a portable terminal (d) 2d is stolen and must accordingly be disabled. The user of the portable terminal (d) 2d reports to the system administrator that his terminal has been stolen.

The process by the key management server 1 will be described first.
In a disable information generation process (S701), upon reception of the report that the terminal is stolen, the system administrator inputs information necessary to distribute the terminal disable command 100 via an input interface 11 of the key management server 1, and instructs that the terminal disable command 100 must be generated and distributed. The disable command generation unit 20 generates the terminal disable command 100 on the portable terminal (d) 2d so that it is distributed. The disable command generation unit 20 generates the disabled terminal information 102 by setting an ID indicating the portable terminal (d) 2d as the disabled terminal IDs 104, the reported date of robbery as the disable date 105, and robbery as the reason of disabling for the other information 106. The digital signature generation unit 15 generates the digital signature 103 by using the private key of the key management server 1. The disable command generation unit 20 also generates the terminal disable command 100 by setting the data classification 101.

In a data transmission process (S702), a data transmission unit 12 transmits the terminal disable command 100 generated by the key management server 1 to a communication satellite 7 via a ground station 6, and the communication satellite 7 transmits the terminal disable command 100 to all the portable terminals by broadcast communication. As the communication of communication satellite 7 possibly cannot reach the respective portable terminals, the terminal disable command 100 is transmitted repeatedly and periodically.

The process by the portable terminal will be described.
Each of a portable terminal (a) 2a, a portable terminal (b) 2b, a portable terminal (c) 2c, and the portable terminal (d) 2d receives the terminal disable command 100 transmitted via the communication satellite 7. If the received instruction 100 is disabling information for its own terminal, the corresponding terminal is disabled by erasing its internal data or by a halt.

In a data reception process (S703), the data reception unit 21 of each portable terminal receives data from the communication satellite 7.

In a disable command interpretation process (S704), the disable command interpretation unit 37 checks whether or not the data classification 101 is a terminal disable command 100. If the disable command interpretation unit 37 determines that the data classification 101 is a terminal disable command 100, the disable command interpretation unit 37 controls to perform the following process for the terminal disable command 100. A digital signature verification unit 24 verifies the digital signature 103 by using the public key of the key management server 1, thus confirming that the terminal disable command 100 has not been falsified. If no falsification is detected, the disable command interpretation unit 37 refers to the disabled terminal IDs 104. If the disabled terminal IDs 104 include the terminal ID of the terminal to which the disable command interpretation unit 37 belongs, the disable command interpretation unit 37 erases the internal data or halts the function of the terminal.

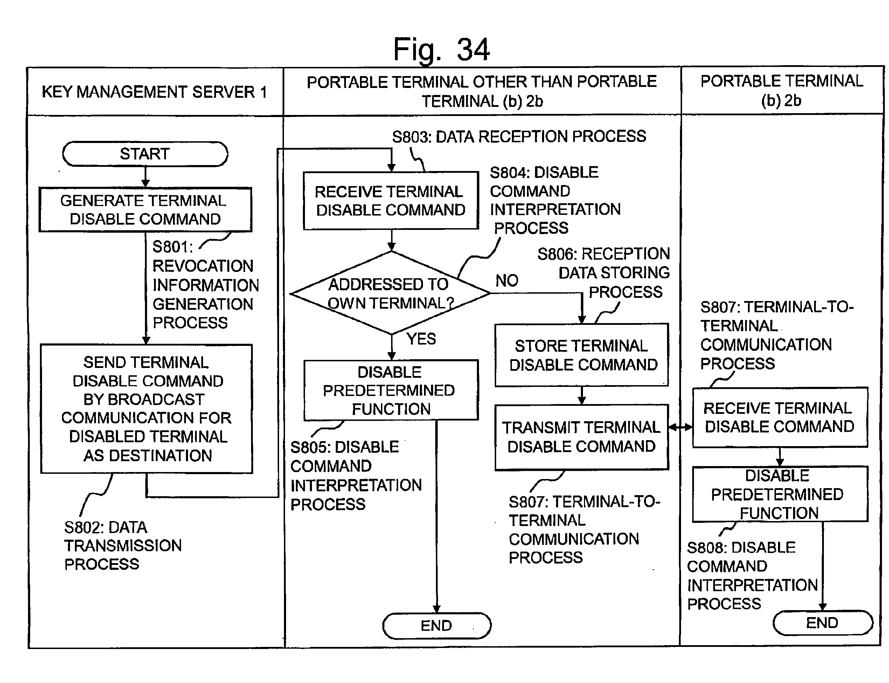

The operation performed by the portable terminal to disable a terminal by transferring the terminal disable command 100 will be described with reference to Fig. 14. Fig. 34 is a flowchart showing the operation performed by the portable terminal to disable a terminal by transferring the terminal disable command 100.
In this example, assume that the portable terminal (d) 2d is stolen and must accordingly be disabled.

Processes (S801) and (S802) of the key management server 1 are identical to the processes (S701) and (S702) described above.

The process by the portable terminal will be described.
Each of the portable terminal (a) 2a, portable terminal (b) 2b, portable terminal (c) 2c, and portable terminal (d) 2d receives the terminal disable command 100 transmitted from the communication satellite 7. If the terminal disable command 100 is a disable command for its own terminal, the terminal executes terminal disabling such as erasure of its internal data or a halt. If the terminal disable command 100 is a disable command for another portable terminal, it is stored in the reception data storage unit 28.

In a data reception process (S803), the data reception unit 21 of each portable terminal receives data from the communication satellite 7.

In a disable command interpretation process (S804), if the data classification 101 is a terminal disable command 100, the disable command interpretation unit 37 controls to perform the following process for the terminal disable command 100. The digital signature verification unit 24 verifies the digital signature 103 by using the public key of the key management server 1, thereby confirming that the terminal disable command 100 has not been falsified. If no falsification is detected, the digital signature verification unit 24 refers to the disabled terminal IDs 104. If the disabled terminal IDs 104 include the terminal ID of the terminal to which the digital signature verification unit 24 belongs (YES in S804), the disable command interpretation unit 37 advances to (S805). If the disabled terminal IDs 104 do not include the terminal ID of the terminal to which the disable command interpretation unit 37 belongs (NO in S804), the disable command interpretation unit 37 advances to (S806).

In a disable command interpretation process (S805), the disable command interpretation unit 37 erases the internal data or halts the function.

In a reception data storing process (S806), the disable command interpretation unit 37 stores the terminal disable command 100 by using the reception data storage unit 28.
In this example, when the portable terminal (d) 2d receives the terminal disable command 100, it erases its internal data or halts the function. If the portable terminal (a) 2a, portable terminal (b) 2b, or portable terminal (c) 2c receives the terminal disable command 100, it stores the terminal disable command 100 in the reception data storage unit 28.

In a terminal-to-terminal communication process (S807), at the start of communication, the terminal-to-terminal communication unit 22 of each portable terminal retrieves the terminal disable command 100 stored in the reception data storage unit 28. If the terminal disable command 100 includes the terminal ID of the other communication party in the disabled terminal IDs 104, the terminal disable command 100 is transferred to the terminal of the other communication party by using the terminal-to-terminal communication unit 22. The terminal-to-terminal communication unit 22 of each portable terminal receives the terminal disable command 100 if it is transferred from the other communication party at the start of communication.

In a disable command interpretation process (S808), the disable command interpretation unit 37 of the portable terminal to which the terminal disable command 100 is transferred treats the terminal disable command 100 in the same manner as in a case in which the terminal disable command 100 is received by the data reception unit 21. The disable command interpretation unit 37 extracts the disabled terminal information 102 in accordance with the same procedure as that described above, and performs a process for the terminal disable command 100.

In this example, assume that a person who has stolen the portable terminal (d) 2d carries it to a place where the terminal disable command 100 from the communication satellite 7 cannot reach, and tries to communicate with the portable terminal (b) 2b by pretending to be the authorized terminal user. The portable terminal (b) 2b that receives a communication start request from the portable terminal (d) 2d has received the terminal disable command 100 in accordance with the procedure described above and stores it in the reception data storage unit 28, and transfers it to the portable terminal (d) 2d. Upon reception of the terminal disable command 100 transferred from the portable terminal (b) 2b, the portable terminal (d) 2d erases its internal data or halts its function in the same manner as in a case in which the terminal disable command 100 is received from the communication satellite 7.

As described above, when a portable terminal is lost or stolen and the user of the terminal reports this to the systemadministrator, the key management server 1 generates the terminal disable command 100 to instruct to disable this lost or stolen portable terminal, and distributes the terminal disable command 100 to all the portable terminals. Thus, even if the portable terminal stolen by the unauthorized user is carried to a place where radio waves from the network 3, base station 4, and base station 5 of the portable terminal do not reach, data in the terminal can be erased and the function of the terminal can be halted. As the terminal disable command 100 is transferred via another portable terminal, even if the portable terminal stolen by the unauthorized user is carried to a place where the terminal disable command 100 from the communication satellite 7 cannot reach, the data in the terminal can be erased and the function of the terminal can be halted as soon as the unauthorized user tries to have masquerade communication with another portable terminal.

In fine, in the terminal management method according to the seventh embodiment, the key management server 1 includes a means for transmitting the terminal disable command 100, and each terminal includes a means for receiving the terminal disable command 100 and a means for transferring the terminal disable command 100. When the key management server 1 receives a report from a terminal user stating that his terminal has been lost or stolen, the key management server 1 generates a disable command for the terminal in question and sends it to the respective terminals one way by broadcast communication. The terminal in question disables its function upon reception of the disable command. Alternatively, terminals other than the terminal in question receive the disable command in behalf of the terminal in question, and transfer the disable command upon reception of a communication request from the terminal in question. Thus, the lost or stolen terminal is disabled.

### Embodiment 8.

In the first to seventh embodiments described above, satellite broadcasting is used as one-way communication from the key management server 1 to the portable terminal (a) 2a, portable terminal (b) 2b, portable terminal (c) 2c, and portable terminal (d) 2d. The eighth embodiment shows a case in which ground wave broadcasting is used for one-way communication.

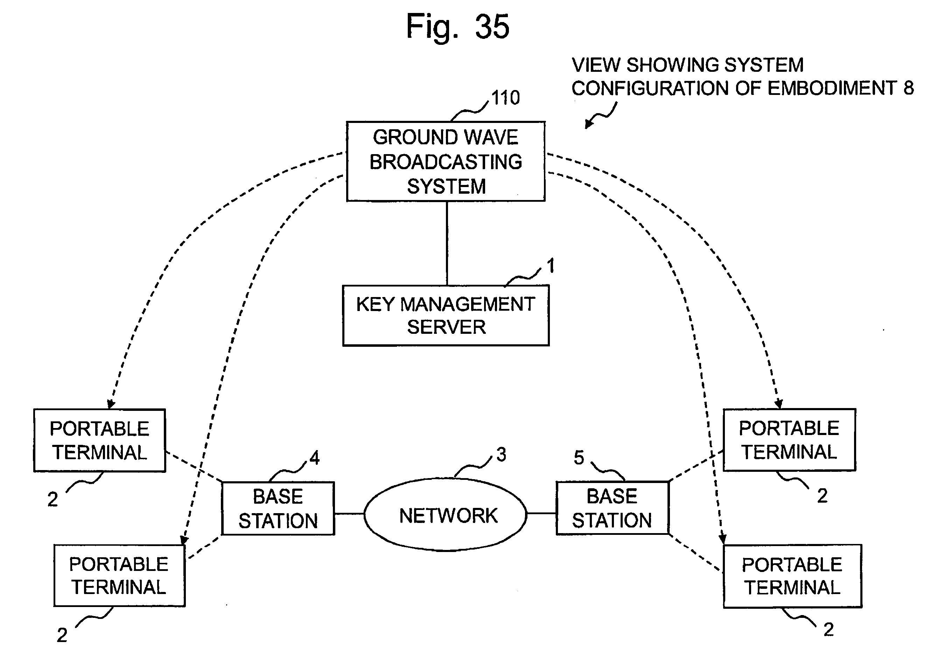

Fig. 35 is a system configuration diagram of the eighth embodiment.
Referring to Fig. 35, a key management server 1 is a server that generates and distributes a cipher key and key update data used for terminal-to-terminal communication, key revocation information 99, and a terminal disable command 100. The portable terminal is of a type that performs terminal-to-terminal encrypted communication. A network 3 is a backbone network used as a communication channel of the terminal-to-terminal communication. A base station 4 and a base station 5 are systems that communicate with the portable terminal directly and relay the communication of the portable terminal with another portable terminal and the network 3. A ground wave broadcasting system 110 is a broadcasting system that transmits various types of data generated by the key management server 1 to the portable terminals.
The function of the key management server 1 is identical to that of the arrangement of each of the first to seventh embodiments.
The function of the portable terminal is identical to that of the arrangement of each of the first to seventh embodiments except that a data reception unit 21 implements the function of receiving various types of data transmitted from the keymanagement server 1 via the ground wave broadcasting system 110.

The operation will now be described.
In the first to seventh embodiments described above, the cipher key data, key update data, revocation information 99, and terminal disable command 100 issued by the key management server 1 are distributed to the respective portable terminals by using satellite broadcasting transmitted by the communication satellite 7 via the ground station, while in the eighth embodiment, they are distributed to the respective portable terminals by using ground wave broadcasting transmitted by the ground wave broadcasting system 110. The operations of the key management server 1, network 3, base station 4, and base station 5 are identical to those of each of the first to seventh embodiments. The operation of the portable terminal is identical to that of each of the first to seventh embodiments except that the data reception unit 21 implements the function of receiving various types of data transmitted from the key management server 1 via the ground wave broadcasting system 110.

As described, various types of data issued by the key management server 1 are distributed by using ground wave broadcasting. Although the reception area of each portable terminal where it receives data from the key management server 1 is narrower than that in satellite broadcasting, encrypted communication can be performed in the same manner as in the first to seventh embodiments while obtaining the effects shown in the first to seventh embodiments. The portable terminal only need be loaded with a ground wave broadcasting reception function in place of a satellite broadcasting reception function. This realizes a compact portable terminal. As the ground station 6 and communication satellite 7 are unnecessary, the operation cost of the entire system can be reduced.

### Embodiment 9.

In the first to eighth embodiments described above, only a portable type terminal is used as a terminal that performs encrypted communication. An embodiment of a case will be described in which both a portable type terminal and an immobile type terminal are employed as the terminals that perform encrypted communication.

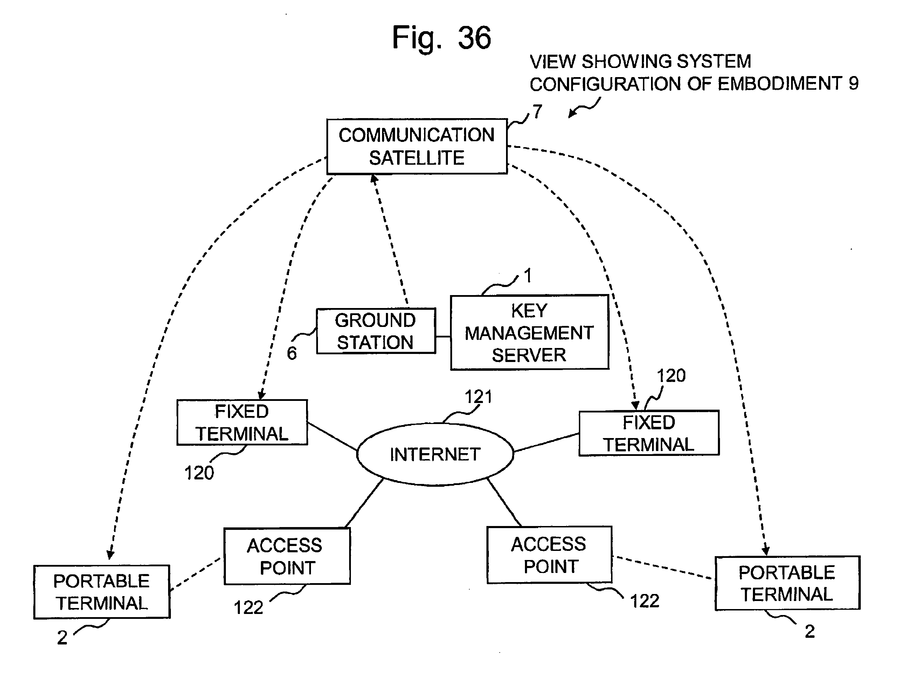

Fig. 36 is a system configuration diagram of the ninth embodiment.
Referring to Fig. 36, a key management server 1 is a server that generates and distributes a cipher key and key update data used for terminal-to-terminal communication, key revocation information 99, and a terminal disable command 100. The portable terminal is a portable type terminal that performs encrypted communication with another portable terminal and a fixed terminal 120. A base station 6 is a relay system to transmit via a communication satellite 7 various types of data transmitted from the key management server 1 to the respective portable terminals. The communication satellite 7 is a satellite system that transmits various types of data relayed by the ground station 6 to the portable terminal and the fixed terminal 120. The fixed terminal 120 is an immobile type terminal that performs encrypted communication with another fixed terminal 120 and the portable terminal. The Internet 121 is a backbone network used as the communication channel of the terminal-to-terminal communication. An access point 122 is a system that communicates with the portable terminal directly and relays this communication to another portable terminal and the Internet 121.
The function of the key management server 1 is identical to that of the arrangement of each of the first to seventh embodiments.
The function of the portable terminal is identical to that of the arrangement of each of the first to seventh embodiments.
The function of the fixed terminal 120 is identical to that of the portable terminal of each of the first to seventh embodiments.

The operation will now be described.
In the first to eighth embodiments described above, each portable terminal communicates with another portable terminal via the network 3, base station 4, and base station 5. In the ninth embodiment, the portable terminal and the fixed terminal 120 communicate with another portable terminal and another fixed terminal 120 via the Internet 121 and access point 122. The operation of the key management server 1 is identical to that of each of the first to seventh embodiments. The operation of the portable terminal is identical to that of the portable terminal 2 of each of the first to seventh embodiments except that the communication channel with other terminals is different. The operation of the fixed terminal 120 is identical to that of the portable terminal of each of the first to seventh embodiments except that the communication channel with other terminals is different.

As described above, the portable terminal and the fixed terminal 120 are provided with the function of receiving various types of data distributed from the key management server 1 via the communication satellite 7, and communicate with other terminals via the Internet 121 and access point 122. Therefore, encrypted communication can be performed in the same manner as in the first to seventh embodiment not only between the portable terminals but also between the portable terminal and the fixed terminal 120 and between the fixed terminals 120, while obtaining the effects described in the first to seventh embodiments.

### Embodiment 10.

In the ninth embodiment described above, a one-way dedicated communication channel employing satellite broadcasting is used for one-way communication from the key management server 1 to the portable terminal (a) 2a and fixed terminal 120. An embodiment of a case will be described in which a communication channel capable of two-way communication is used.

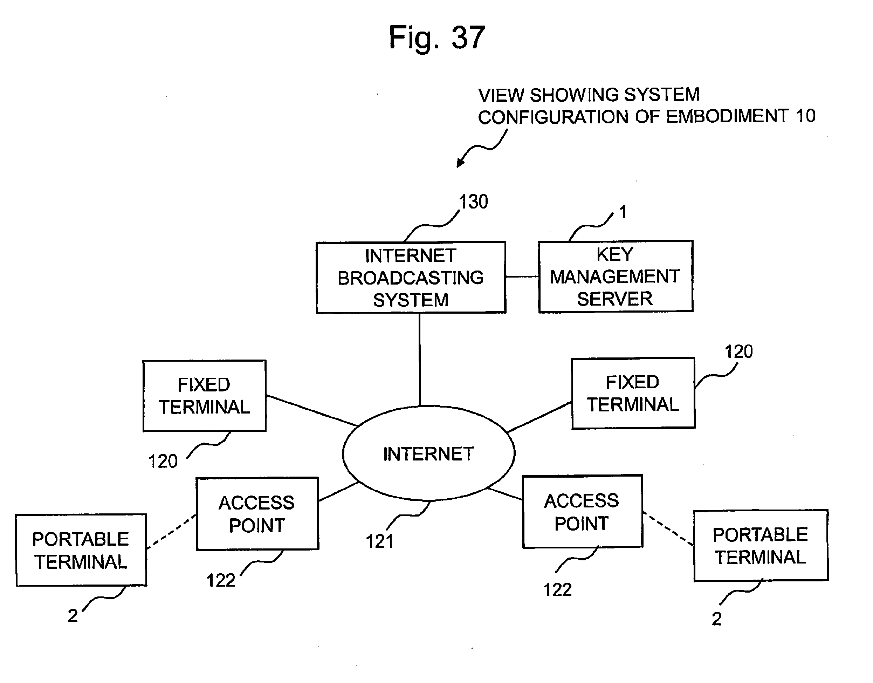

Fig. 37 is a system configuration diagram of the tenth embodiment.
Referring to Fig. 37, a key management server 1 is a server that generates and distributes a cipher key and key update data used for terminal-to-terminal communication, key revocation information 99, and a terminal disable command 100. The portable terminal is a portable type terminal that performs encrypted communication with another portable terminal and a fixed terminal 120. The fixed terminal 120 is an immobile type terminal that performs encrypted communication with another fixed terminal 120 and the portable terminal. The Internet 121 is a backbone network used as the communication channel of terminal-to-terminal communication and of communication between the terminal and an Internet broadcasting system 130. An access point 122 is a system that communicates with the portable terminal directly and relays this communication to another portable terminal and the Internet 121. The Internet broadcasting system 130 is a broadcasting system that transmits various types of data generated by the keymanagement server 1 to the portable terminal via the Internet.
The function of the key management server 1 is identical to that of the arrangement of each of the first seventh embodiments.
The function of the portable terminal is identical to that of the arrangement of each of the first to seventh embodiment.
The function of the fixed terminal 120 is identical to that of the portable terminal of each of the first to seventh embodiments.

The operation will now be described.
In the ninth embodiment described above, the cipher key data, key update data, revocation information 99, and terminal disable command 100 issued by the key management server 1 are distributed via the ground station 6 to the respective portable terminals and the fixed terminals 120 by using satellite broadcasting transmitted by the communication satellite 7, while in the tenth embodiment, they are distributed to the respective portable terminals by using Internet broadcasting transmitted by the Internet broadcasting system 130. The operations of the keymanagement server 1, Internet 121, and access point 122 are identical to those of the ninth embodiment. The operations of the portable terminal and the fixed terminal 120 are identical to those of the ninth embodiment except that a data reception unit 21 implements the function of receiving various types of data transmitted from the key management server 1 via the Internet broadcasting system 130, Internet 121, and access point 122.

As has been described above, various types of data transmitted from the key management server 1 to the portable terminal and the fixed terminal 120 are distributed by using the Internet broadcasting, and transmitted as one-way communication via the Internet broadcasting system 130, Internet 121, and access point 122. Even if a communication channel capable of two-way communication is established between the key management server 1 and each terminal, encrypted communication can be performed in the same manner as in the ninth embodiment while obtaining the effects described in the first to seventh embodiments. The portable terminal can be made compact as it only need be loaded with the function of communicating with the access point 122. The fixed terminal 120 can be made compact as it only need be loaded with the function of communicating with the Internet 121. As the ground station 6, communication satellite 7, or ground wave broadcasting system 110 becomes unnecessary, the operation cost of the entire system can be reduced.

### Brief Explanation of the Drawings

[Fig. 1]
   Fig. 1 is a view showing an example of the appearance of the key sharing system 1000 of an embodiment.
[Fig. 2]
   Fig. 2 is a view showing examples of the hardware resources of the key management server 1 and terminal 2 of the embodiment.
[Fig. 3]
   Fig. 3 is a system configuration diagram of the first embodiment.
[Fig. 4]
   Fig. 4 is a view showing the data flow when distributing cipher key data in the system configuration shown in Fig. 3.
[Fig. 5]
   Fig. 5 shows the data format of the cipher key data (ab) 41 in Fig. 4.
[Fig. 6]
   Fig. 6 is a function block diagram showing the function of the key management server 1 of the first embodiment.
[Fig. 7]
   Fig. 7 is a function block diagram showing the function of the portable terminal (terminal 2) of the first embodiment.
[Fig. 8]
   Fig. 8 is a flowchart showing the operation in which the keys management server 1 generates and distributes the cipher keys so that the portable terminals share the cipher keys.
[Fig. 9]
   Fig. 9 is a view showing the data flow when the cipher key data is to be updated in the system configuration shown in Fig. 3.
[Fig. 10]
   Fig. 10 shows the data format of the key update data (1) 61 in Fig. 9.
[Fig. 11]
   Fig. 11 is a function block diagram showing the function of the key management server 1 of the second embodiment.
[Fig. 12]
   Fig. 12 is a function block diagram showing the function of the portable terminal of the second embodiment.
[Fig. 13]
   Fig. 13 is a flowchart showing the operation performed by a plurality of portable terminals to share a new cipher key by means of the key update data.
[Fig. 14]
   Fig. 14 is a view showing the data flow when transferring the cipher key data in the system configuration shown in Fig. 3.
[Fig. 15]
   Fig. 15 is a function block diagram showing the function of the portable terminal of the third embodiment.
[Fig. 16]
   Fig. 16 is a flowchart showing the operation performed by the portable terminals to share the cipher key by transferring the cipher key.
[Fig. 17]
   Fig. 17 is a view showing the data flow when generating and transmitting spare key data in the system configuration shown in Fig. 3.
[Fig. 18]
   Fig. 18 shows the data format of the spare key data 80 in Fig. 17.
[Fig. 19]
   Fig. 19 is a function block diagram showing the function of the portable terminal of the fourth embodiment.
[Fig. 20]
   Fig. 20 is a flowchart showing the operation of sharing the spare key data between the portable terminals.
[Fig. 21]
   Fig. 21 is a view showing the data flow when the result of arithmetic operation with the private key is to be utilized as a cipher key in the system configuration shown in Fig. 3.
[Fig. 22]
   Fig. 22 is a function block diagram showing the function of the portable terminal of the fifth embodiment.
[Fig. 23]
   Fig. 23 is a flowchart showing the operation of performing encrypted communication using the key data calculated based on the secret information.
[Fig. 24]
   Fig. 24 is a view showing the data flow when distributing the revocation information 99 in the system configuration shown in Fig. 3.
[Fig. 25]
   Fig. 25 is a view showing the data format of the revocation information 99 in Fig. 24.
[Fig. 26]
   Fig. 26 is a function block diagram showing the function of the key management server 1 in the sixth embodiment.
[Fig. 27]
   Fig. 27 is a function block diagram showing the function of the portable terminal of the sixth embodiment.
[Fig. 28]
   Fig. 28 is a flowchart showing the operation of key disposal by distributing the revocation information 99.
[Fig. 29]
   Fig. 29 is a view showing the data flow when transmitting and transferring the terminal disable command 100 in the system configuration shown in Fig. 3.
[Fig. 30]
   Fig. 30 is a view showing the data format of the terminal disable command 100 in Fig. 29.
[Fig. 31]
   Fig. 31 is a function block diagram showing the function of the key management server 1 of the seventh embodiment.
[Fig. 32]
   Fig. 32 is a function block diagram showing the function of the portable terminal of the seventh embodiment.
[Fig. 33]
   Fig. 33 is a flowchart showing the operation of disabling the terminal by transmitting the terminal disable command 100.
[Fig. 34]
   Fig. 34 is a flowchart showing the operation performed by the portable terminal to disable a terminal by transferring the terminal disable command 100.
[Fig. 35]
   Fig. 35 is a system configuration diagram of the eighth embodiment.
[Fig. 36]
   Fig. 36 is a system configuration diagram of the ninth embodiment.
[Fig. 37]
   Fig. 37 is a system configuration diagram of the tenth embodiment.

### Explanation of Signs

- 1:: key management server
- 1- 1:: key management server processing unit
- 11:: input interface
- 12:: data transmission unit
- 13:: random number generation unit
- 14:: encryption unit
- 15:: digital signature generation unit
- 16:: device public key management unit
- 17:: cipher key data generation unit
- 18:: key update data generation unit
- 19:: revocation information generation unit
- 20:: disable command generation unit
- 2:: terminal
- 2a:: portable terminal (a)
- 2b:: portable terminal (b)
- 2c:: portable terminal (c)
- 2d:: portable terminal (d)
- 21:: data reception unit
- 22:: terminal-to-terminal communication unit
- 23:: decryption unit
- 24:: digital signature verification unit
- 25:: device private key management unit
- 26:: cipher key data interpretation unit
- 27:: cipher key storage unit
- 28:: reception data storage unit
- 29:: key update arithmetic operation unit
- 30:: key update data interpretation unit
- 31:: pseudo-random number generation unit
- 32:: spare key data generation unit 32
- 33:: spare key data interpretation unit
- 34:: secret information input unit
- 35:: secret information arithmetic operation unit
- 36:: revocation information interpretation unit
- 37:: disable command interpretation unit
- 38:: authentication value calculation unit
- 3:: network
- 4,: 5: base station
- 6:: ground station
- 7:: communication satellite
- 41:: cipher key data (ab)
- 42:: cipher key data (ba)
- 43:: cipher key data (ac)
- 44:: cipher key data (ca)
- 45:: cipher key data (bc)
- 46:: cipher key data (cb)
- 61:: key update data (1)
- 62:: key update data (2)
- 901:: LCD
- 902:: K/B
- 903:: mouse
- 904:: FD
- 905:: CDD
- 908:: database
- 910:: server
- 911:: CPU
- 912:: bus
- 913:: ROM
- 914:: RAM
- 915:: communication board
- 920:: magnetic disc device
- 921:: OS
- 922:: window system
- 923:: program group
- 924:: file group
- 940:: Internet
- 941:: gateway
- 942:: LAN
- 943:: communication satellite
- 944A:: portable terminal A
- 944B:: portable terminal B
- 946:: external server
- 980:: processing device
- 982:: input device
- 984:: storage device
- 986:: display device
- 988:: communication device
- 1000:: key sharing system

## Claims

1. A key management server capable of communicating with a plurality of terminals, comprising:
a cipher key data generation unit which generates, with a processing device, a master key used for terminal-to-terminal encrypted communication among the plurality of terminals;
an encryption unit which encrypts, with the processing device, the master key into an encrypted master key by using a device public key which is a public key of a terminal that uses the master key generated by the cipher key data generation unit; and
a data transmission unit which transmits, with a communication device, the encrypted master key encrypted by the encryption unit to the plurality of terminals one-sidedly as cipher key data for the terminal as a destination.

2. The key management server according to claim 1, wherein the cipher key data generation unit generates a specific master key for each set of terminals that perform encrypted communication.

3. The key management server according to claim 1 or 2, further comprising
a key update data generation unit which generates, with a processing device, key update data which is data to update the master key generated by the cipher key data generation unit and which is data common to the plurality of terminals,
wherein the data transmission unit transmits the key update data generated by the key update data generation unit to the plurality of terminals.

4. The key management server according to any one of claims 1 to 3, further comprising
a revocation information generation unit which generates, with a processing device, key revocation information which instructs disposal of a master key used for encrypted communication with a disabled terminal, whose predetermined function is to be disabled,
wherein the data transmission unit transmits the key revocation information generated by the revocation information generation unit to the plurality of terminals.

5. The key management server according to any one of claims 1 to 4, further comprising
a disable command generation unit which generates, with a processing device, disable command information which instructs a disabled terminal, whose predetermined function is to be disabled, to halt the predetermined function,
wherein the data transmission unit transmits the disable command information generated by the disable command generation unit to the plurality of terminals as disabling data for the disabled terminal as a destination.

6. The key management server according to any one of claims 1 to 5, further comprising
a digital signature generation unit which generates, with a processing device, digital signature concerning the encrypted master key by using a private key of the key management server,
wherein the data transmission unit transmits the encrypted master key and the digital signature which is generated by the digital signature generation unit as cipher key data.

7. A terminal comprising:
a data reception unit which receives, with a communication device, cipher key data generated by a key management server as an encrypted master key by encrypting a master key by using a device public key, which is a public key of a predetermined terminal, and sent by broadcast communication for the terminal as a destination;
a cipher key data interpretation unit which checks, with a processing device, whether or not the cipher key data received by the data reception unit is sent by broadcast communication for a terminal thereof as a destination;
a device private key management unit which stores a device private key, which is a private key of the terminal thereof, in a storage device;
a decryption unit which, when the cipher key data interpretation unit determines that the cipher key data received by the data reception unit is sent by broadcast communication for the terminal thereof as the destination, decrypts, with a processing device, the encrypted master key included in the cipher key data into the master key by using the device private key stored in the device private key management unit;
a cipher key storage unit which stores the master key decrypted by the decryption unit in a storage device; and
a terminal-to-terminal communication unit which performs encrypted communication with a communication device by using the master key stored in the cipher key storage unit.

8. The terminal according to claim 7,
wherein the data reception unit receives key update data which is data to update the master key sent by broadcast communication by the key management server,
the terminal further comprising
a key update arithmetic operation unit which calculates a new master key with a processing device based on the master key stored in the cipher key storage unit and the key update data received by the data reception unit,
wherein the terminal-to-terminal communication unit performs encrypted communication by using the new master key calculated by the key update arithmetic operation unit.

9. The terminal according to claim 7 or 8, further comprising
a reception data storage unit which stores the cipher key data in a storage device when the cipher key data interpretation unit determines that the cipher key data received by the data reception unit is not sent by broadcast communication for the terminal thereof as the destination,
wherein the terminal-to-terminal communication unit checks with a processing device whether or not the other party terminal to perform encrypted communication with has a master key used for encrypted communication,
wherein the reception data storage unit retrieves the cipher key data sent by broadcast communication for the other party terminal as a destination among cipher key data stored in the storage device when the terminal-to-terminal communication unit determines that the other party terminal does not have the master key used for encrypted communication, and
wherein the terminal-to-terminal communication unit transmits the cipher key data retrieved by the reception data storage unit to the other party terminal.

10. The terminal according to any one of claims 7 to 9, further comprising
a spare key data generation unit which generates, with a processing device, spare key data which is a spare key to be used for encrypted communication,
wherein the terminal-to-terminal communication unit transmits the spare key data generated by the spare key data generation unit to predetermined another terminal by encrypted communication by using the master key, in a predetermined case, in order to share the spare key data with predetermined another terminal in advance and, when encrypted communication cannot be performed by using the master key, performs encrypted communication by using the spare key data.

11. The terminal according to any one of claims 7 to 10, further comprising:
a secret information input unit which inputs, with an input device, secret information shared by a user of another terminal to perform encrypted communication with in advance; and
a secret information arithmetic operation unit which generates, with a processing device, a new master key through arithmetic operation in accordance with a predetermined method shared with another terminal in advance based on the master key and the secret information input by the secret information input unit,
wherein the terminal-to-terminal communication unit performs encrypted communication by using the new master key generated by the secret information arithmetic operation unit.

12. The terminal according to any one of claims 7 to 11,
wherein the data reception unit receives key revocation information sent from the key management server by broadcast communication and instructing disposal of a master key used for encrypted communication with a disabled terminal, whose predetermined function is to be disabled,
the terminal further comprising
a revocation information interpretation unit which deletes, with a processing device, the master key to be used for encrypted communication with the disabled terminal from master keys stored in the cipher key storage unit based on the key revocation information received by the data reception unit.

13. The terminal according to any one of claims 7 to 12,
wherein the data reception unit receives disabling data generated by the key management server as disable command information that instructs a disabled terminal, whose predetermined function is to be disabled, to halt the predetermined function, and sent from the key management server by broadcast communication for the disabled terminal as the destination,
the terminal further comprising
a disable command interpretation unit which checks whether or not the disabling data received by the data reception unit is sent by broadcast communication for a terminal thereof as a destination and, when it is determined that the disabling data is sent by broadcast communication for the terminal thereof as the destination, halts the predetermined function with a processing device.

14. The terminal according to claim 13, further comprising
a reception data storage unit which stores the disabling data in a storage device when the disable command interpretation unit determines that the disabling data is not sent by broadcast communication for the terminal thereof as the destination,
wherein the terminal-to-terminal communication unit checks whether or not the other party terminal to perform encrypted communication with is a terminal to which the disabling data stored in the reception data storage unit is addressed and, when it is determined that the other party terminal is the terminal to which the disabling data is addressed, transmits the disabling data to the other party terminal.

15. The terminal according to any one of claims 7 to 14,
wherein the data reception unit receives, together with the encrypted master key, a digital signature, generated concerning the encrypted master key by the key management server by using a private key, as cipher key data,
the terminal further comprising
a digital signature verification unit which verifies the digital signature of the cipher key data by using a public key of the key management server.

16. A key sharing system comprising a plurality of terminals which perform encrypted communication and a key management server capable of communicating with the plurality of terminals,
the key management server including
a cipher key data generation unit which generates, with a processing device, a master key used for terminal-to-terminal encrypted communication among the plurality of terminals,
an encryption unit which encrypts, with the processing device, the master key into an encrypted master key by using a device public key which is a public key of a terminal that uses the master key generated by the cipher key data generation unit, and
a data transmission unit which transmits, with a communication device, the encrypted master key encrypted by the encryption unit to the plurality of terminals one-sidedly as cipher key data for the terminal as a destination, and
each one of the plurality of terminals including
a data reception unit which receives, with a communication device, the cipher key data transmitted by the data transmission unit,
a cipher key data interpretation unit which checks, with a processing device, whether or not the cipher key data received by the data reception unit is transmitted for a terminal thereof as a destination,
a device private key management unit which stores a device private key, which is a private key of the terminal thereof, in a storage device,
a decryption unit which, when the cipher key data interpretation unit determines that the cipher key data received by the data reception unit is transmitted for the terminal thereof as the destination, decrypts, with a processing device, the encrypted master key included in the cipher key data into the master key by using the device private key stored in the device private key management unit,
a cipher key storage unit which stores the master key decrypted by the decryption unit in a storage device, and
a terminal-to-terminal communication unit which performs encrypted communication with a communication device by using the master key stored in the cipher key storage unit.

17. A key delivery program for a key management server capable of communicating with a plurality of terminals, the program serving to cause a computer to perform:
a cipher key data generation process for generating, with a processing device, a master key to be used for terminal-to-terminal encrypted communication among the plurality of terminals;
an encryption process for encrypting the master key into an encrypted master key with the processing device by using a device public key which is a public key of a terminal that uses the master key generated in the cipher key data generation process; and
a data transmission process for transmitting, with a communication device, the encrypted master key encrypted in the encryption process to the plurality of terminals one-sidedly as cipher key data for the terminal as a destination.

18. A key reception program for a terminal, which causes a computer to perform:
a data reception process for receiving, with a communication device, cipher key data generated by a key management program as an encrypted master key by encrypting a master key by using a device public key, which is a public key of a predetermined terminal, and sent by broadcast communication for the terminal as a destination;
a cipher key data interpretation process for checking, with a processing device, whether or not the cipher key data received in the data reception process is transmitted for a terminal thereof as a destination;
a decryption process for decrypting, with a processing device, when it is determined in the cipher key data interpretation process that the cipher key data received in the data reception process is transmitted for the terminal thereof as the destination, the encrypted master key included in the cipher key data into the master key by using a device private key which is a private key of the terminal thereof and stored in a storage device in advance;
a cipher key storage process for storing the master key decrypted in the decryption process in the storage device; and
a terminal-to-terminal communication process for performing, with the communication device, encrypted communication by using the master key stored in the cipher key storage process.

19. A key delivery method for a key management server capable of communicating with a plurality of terminals, comprising:
a cipher key data generating step of generating, with a processing device, a master key to be used for terminal-to-terminal encrypted communication among the plurality of terminals;
an encryption step of encrypting, with the processing device, the master key into an encrypted master key by using a device public key which is a public key of a terminal that uses the master key generated in the cipher key data generation step; and
a data transmission step of transmitting, with a communication device, the encrypted master key encrypted in the encryption step to the plurality of terminals one-sidedly as cipher key data for the terminal as a destination.

20. A key reception method for a terminal, comprising:
a data reception step of receiving, with a communication device, cipher key data generated by a key management server as an encrypted master key by encrypting a master key by using a device public key, which is a public key of a predetermined terminal, and sent by broadcast communication for the terminal as a destination;
a cipher key data interpretation step of checking, with a processing device, whether or not the cipher key data received in the data reception process is transmitted for a terminal thereof as a destination;
a decryption step of decrypting, with a processing device, when it is determined in the cipher key data interpretation process that the cipher key data received in the data reception process is transmitted for the terminal thereof as the destination, the encrypted master key included in the cipher key data into the master key by using a device private key which is a private key of the terminal thereof and stored in a storage device in advance;
a cipher key storing step of storing the master key decrypted in the decryption process in the storage device; and
a terminal-to-terminal communication step of performing, with the communication device, encrypted communication by using the master key stored in the cipher key storing step.
